# EUROPEAN PATENT APPLICATION

(11) **EP 4 550 682 A1**
(43) Date of publication of application: **07.05.2025**
(21) Application number: 22948705.3
(22) Date of filing: 01.07.2022
(51) Int. Cl.: H04B 7/06

(54) **BEAM MEASUREMENT RESULT REPORTING METHOD AND APPARATUS**

(71) Applicant: Beijing Xiaomi Mobile Software Co., Ltd., Beijing 100085 (CN)
(72) Inventor: LUO, Xingyi, Beijing 100085 (CN)
(74) Representative: Stöckeler, Ferdinand
(86) International application number: PCT/CN2022/103486
(87) International publication number: WO 2024/000606

(57) **Abstract**

Disclosed in embodiments of the present disclosure are a beam measurement result reporting method and an apparatus, applicable to the technical field of communications. The method executed by a terminal device comprises: reporting a beam measurement result of a specific candidate cell to a network device, wherein the specific candidate cell is determined from candidate cells by a terminal device. Therefore, on the basis that the network device can obtain a network state in time and making a switching decision in time according to the network stage, the power consumption of the terminal device may be reduced, and the resource overhead caused by frequent beam measurement result reporting may also be reduced.

## Description

### FIELD

The present disclosure relates to the technical field of communication technologies, and more particularly to a method and a device for reporting a beam measurement result.

### BACKGROUND

In the related art, beam measurement of candidate cells and reporting the beam measurement result are supported, so as to determine whether to switch a cell based on the beam measurement result. For reporting of the beam measurement result, the terminal device will perform beam measurement on all candidate cells and report the beam measurement results of all candidate cells, so that the network device may understand the network state and make a switching decision.

However, in this mode, the terminal device needs to frequently report the beam measurement result of each candidate cell, which is not conducive to energy saving of the terminal device and will occupy more uplink resources. This is a problem that needs to be solved urgently.

### SUMMARY

The embodiments of the present disclosure provide a method and a device for reporting a beam measurement result. On the basis that the network device may obtain the network state timely and make a switching decision timely according to the network state, the power consumption of the terminal device may be saved and the resource overhead caused by frequently reporting beam measurement results may be reduced.

In a first aspect, an embodiment of the present disclosure provides a method for reporting a beam measurement result, the method is performed by a terminal device and includes: reporting the beam measurement result of a specific candidate cell to a network device, in which the specific candidate cell is determined by the terminal device from candidate cells.

In this technical solution, the terminal device reports the beam measurement result of the specific candidate cell to the network device, in which the specific candidate cell is determined by the terminal device from the candidate cells. Thus, on the basis that the network device may obtain the network state timely and make a switching decision timely according to the network state, the power consumption of the terminal device may be saved, and the resource overhead caused by the frequent reporting of beam measurement results may also be reduced.

In a second aspect, an embodiment of the present disclosure provides another method for reporting a beam measurement result, the method is performed by a network device and includes: receiving the beam measurement result of a specific candidate cell reported by a terminal device, in which the specific candidate cell is determined by the terminal device from candidate cells.

In a third aspect, an embodiment of the present disclosure provides a communication device, which has some or all of the functions of the terminal device in the method described in the first aspect. For example, the functions of the communication device may have some or all of the functions in the embodiments of the present disclosure, or may have the functions of implementing any one of the embodiments of the present disclosure alone. The functions may be implemented by hardware, or may be implemented by hardware executing corresponding software. The hardware or software includes one or more units or modules corresponding to the above functions.

In one implementation, the structure of the communication device may include a transceiver module and a processing module, and the processing module is configured to support the communication device to perform the corresponding functions in the above method. The transceiver module is used to support communication between the communication device and other devices. The communication device may also include a storage module, which is used to couple with the transceiver module and the processing module, and store the computer programs and data necessary for the communication device.

In one implementation, the communication device includes: a transceiver module, configured to report a beam measurement result of a specific candidate cell to a network device, in which the specific candidate cell is determined by the terminal device from the candidate cells.

In a fourth aspect, an embodiment of the present disclosure provides another communication device, which has some or all of the functions of the network device in the method example described in the second aspect, such as the functions of the communication device may have some or all of the functions in the embodiments of the present disclosure, or may have the functions of implementing any one of the embodiments of the present disclosure alone. The functions may be implemented by hardware, or by hardware executing corresponding software. The hardware or software includes one or more units or modules corresponding to the above functions.

In one implementation, the structure of the communication device may include a transceiver module and a processing module, and the processing module is configured to support the communication device to perform the corresponding functions in the above method. The transceiver module is used to support communication between the communication device and other devices. The communication device may also include a storage module, which is used to couple with the transceiver module and the processing module, and store the computer programs and data necessary for the communication device.

In one implementation, the communication device includes: a transceiver module, configured to receive a beam measurement result of a specific candidate cell reported by a terminal device, in which the specific candidate cell is determined by the terminal device from the candidate cells.

In a fifth aspect, an embodiment of the present disclosure provides a communication device, which includes a processor. When the processor calls a computer program in a memory, the method described in the first aspect is executed.

In a sixth aspect, an embodiment of the present disclosure provides a communication device, which includes a processor. When the processor calls a computer program in a memory, the method described in the second aspect is executed.

In a seventh aspect, an embodiment of the present disclosure provides a communication device, which includes a processor and a memory, a computer program is stored in the memory; the processor executes the computer program stored in the memory to cause the communication device to execute the method described in the first aspect.

In an eighth aspect, an embodiment of the present disclosure provides a communication device, which includes a processor and a memory, a computer program is stored in the memory; the processor executes the computer program stored in the memory to cause the communication device executes the method described in the second aspect.

In a ninth aspect, an embodiment of the present disclosure provides a communication device, which includes a processor and an interface circuit, the interface circuit is used to receive code instructions and transmit the code instructions to the processor, and the processor is used to run the code instructions to cause the device to execute the method described in the first aspect.

In a tenth aspect, an embodiment of the present disclosure provides a communication device, which includes a processor and an interface circuit, in which the interface circuit is used to receive code instructions and transmit the code instructions to the processor, and the processor is used to run the code instructions to cause the device to execute the method described in the second aspect.

In the eleventh aspect, an embodiment of the present disclosure provides a random access system, the system includes the communication device described in the third aspect and the communication device described in the fourth aspect, or the system includes the communication device described in the fifth aspect and the communication device described in the sixth aspect, or the system includes the communication device described in the seventh aspect and the communication device described in the eighth aspect, or the system includes the communication device described in the ninth aspect and the communication device described in the tenth aspect.

In a twelfth aspect, an embodiment of the present invention provides a computer readable storage medium for storing instructions used by terminal device, and when the instructions are executed, the terminal device performs the method described in the first aspect.

In a thirteenth aspect, an embodiment of the present invention provides a readable storage medium for storing instructions used by the network device, and when the instructions are executed, the network device performs the method described in the second aspect.

In a fourteenth aspect, the present disclosure further provides a computer program product including a computer program, the computer program is executed on a computer to cause the computer to execute the method described in the first aspect.

In a fifteenth aspect, the present disclosure further provides a computer program product including a computer program, the computer program is executed on a computer to cause the computer to execute the method described in the second aspect.

In a sixteenth aspect, the present disclosure provides a chip system, which includes at least one processor and an interface, is configured to support a terminal device to implement the functions involved in the first aspect, for example, to determine or process at least one of the data and information involved in the above method. In a possible design, the chip system also includes a memory, which is used to store computer programs and data necessary for the terminal device. The chip system may be composed of a chip, or may include a chip and other discrete devices.

In a seventeenth aspect, the present disclosure provides a chip system, which includes at least one processor and an interface, and is configured to support a network device to implement the functions involved in the second aspect, for example, to determine or process at least one of the data and information involved in the above method. In one possible design, the chip system also includes a memory, and the memory is used to store computer programs and data necessary for the network device. The chip system may be composed of a chip, or may include a chip and other discrete devices.

In an eighteenth aspect, the present disclosure provides a computer program, the computer program is executed on a computer to cause the computer to execute the method described in the first aspect.

In a nineteenth aspect, the present disclosure provides a computer program, the computer program is executed on a computer to cause the computer to execute the method described in the second aspect.

### BRIEF DESCRIPTION OF THE DRAWINGS

In order to more clearly illustrate the technical solutions in the embodiments of the present disclosure or the background technology, the drawings in the embodiments of the present disclosure or the background technology will be described below.
FIG. 1 is an architecture diagram of a communication system according to an embodiment of the present disclosure;
FIG. 2 is a flow chart of a method for reporting a beam measurement result according to an embodiment of the present disclosure;
FIG. 3 is a schematic diagram of a candidate cell beam measurement method according to an embodiment of the present disclosure;
FIG. 4 is a schematic diagram of an MAC CE format according to an embodiment of the present disclosure;
FIG. 5 is a schematic diagram of another MAC CE format according to an embodiment of the present disclosure;
FIG. 6 is a schematic diagram of another MAC CE format according to an embodiment of the present disclosure;
FIG. 7 is a schematic diagram of another MAC CE format according to an embodiment of the present disclosure;
FIG. 8 is a flowchart of another method for reporting the beam measurement result according to an embodiment of the present disclosure;
FIG. 9 is a flowchart of another method for reporting the beam measurement result according to an embodiment of the present disclosure;
FIG. 10 is a flowchart of another method for reporting the beam measurement result according to an embodiment of the present disclosure;
FIG. 11 is a flowchart of another method for reporting the beam measurement result according to an embodiment of the present disclosure;
FIG. 12 is a flowchart of another method for reporting the beam measurement result according to an embodiment of the present disclosure;
FIG. 13 is a flowchart of another method for reporting the beam measurement result according to an embodiment of the present disclosure;
FIG. 14 is a flowchart of another method for reporting the beam measurement result according to an embodiment of the present disclosure;
FIG. 15 is a flowchart of another method for reporting the beam measurement result according to an embodiment of the present disclosure;
FIG. 16 is a flowchart of another method for reporting the beam measurement result according to an embodiment of the present disclosure;
FIG. 17 is a flowchart of another method for reporting the beam measurement result according to an embodiment of the present disclosure;
FIG. 18 is a flowchart of another method for reporting the beam measurement result according to an embodiment of the present disclosure;
FIG. 19 is a flowchart of another method for reporting the beam measurement result according to an embodiment of the present disclosure;
FIG. 20 is a flowchart of another method for reporting the beam measurement result according to an embodiment of the present disclosure;
FIG. 21 is a structural diagram of a communication device according to an embodiment of the present disclosure;
FIG. 22 is a structural diagram of another communication device according to an embodiment of the present disclosure;
FIG. 23 is a schematic diagram of the structure of a chip according to an embodiment of the present disclosure.

### DETAILED DESCRIPTION

To facilitate understanding of the present disclosure, some concepts involved in the embodiments of the present disclosure are briefly introduced here.

1. Beam: a beam is a communication resource. A beam may be a wide beam, a narrow beam, or other types of beams. The technology for forming a beam may be beamforming technology or other technical means. Beamforming technology may be specifically digital beamforming technology, analog beamforming technology, and hybrid digital/analog beamforming technology. Different beams may be considered as different resources. The same information or different information may be sent with different beams. Optionally, a plurality of beams with the same or similar communication characteristics may be regarded as one beam. One beam may include one or more antenna ports for transmitting data channels, control channels, and detection signals. For example, a transmit beam may refer to the signal strength distribution formed in different directions of space after the signal is transmitted by the antenna, and a receive beam may refer to the signal strength distribution of the wireless signal received from the antenna in different directions of space. It may be understood that one or more antenna ports that form one beam may also be regarded as one antenna port set. The expression of the beam in the protocol may still be a spatial filter.

The information of the beam may be identified by index information. Optionally, the index information may correspond to a resource identifier configuring a terminal device, for example, the index information may correspond to an ID or a resource of a configured channel status information reference signal (CSI-RS), or may correspond to an ID or a resource of a configured uplink sounding reference signal (SRS). Optionally, the index information may also be index information explicitly or implicitly carried by a signal or channel carried by the beam, for example, the index information may be index information of the beam indicated by a synchronization signal or a broadcast channel sent by the beam.

Alternatively, the identity of the beam information includes the absolute index of the beam, the relative index of the beam, the logical index of the beam, the index of the antenna port corresponding to the beam, the index of the antenna port group corresponding to the beam, the time index of the downlink synchronization signal block, the beam pair link (BPL) information, the transmit parameter (Txparameter) corresponding to the beam, the receive parameter (Rx parameter) corresponding to the beam, the transmit weight corresponding to the beam, the weight vector, the weight matrix, the receive weight corresponding to the beam, or indexes thereof, the transmit codebook corresponding to the beam, the receive codebook corresponding to the beam, or indexes thereof.

2. A reference signal and a reference signal resource: the reference signal may be used for channel measurement, channel estimation or beam quality monitoring. The reference signal resource may be used to configure the transmission properties of the reference signal, such as time-frequency resource location, port mapping relationship, power factor and scrambling code, etc. The details may refer to the prior art. The sending device may send the reference signal based on the reference signal resource, and the receiving device may receive the reference signal based on the reference signal resource.

The reference signal may include, for example, a channel state information reference signal (CSI-RS), a synchronization signal block (SSB), and a sounding reference signal (SRS). Correspondingly, the reference signal resource may include a CSI-RS resource, an SSB resource, and an SRS resource.

It should be noted that the SSB may also be called synchronization signal/physical broadcast channel block (SS/PBCH block), and the corresponding SSB resource may also be called synchronization signal/physical broadcast channel block resource (SS/PBCH block resource), which may be abbreviated as SSB resource.

In order to distinguish different reference signal resources, each reference signal resource may correspond to a reference signal resource identifier, for example, a CSI-RS resource indicator (CRI), an SSB resource indicator (SSBRI), or an SRS resource index (SRI).

The SSB resource identifier may also be called the SSB identifier (SSB index).

3. CSI Report Configuration (CSI ReportConfig) may be used to configure a resourcesForChannelMeasurement. One reference signal resource set may be bound to the CSI report configuration, and this reference signal resource set may include one or more reference signal resources. For example, a CSI-RS resource set may include one or more CSI-RS resources.

The terminal device may receive the reference signal based on the plurality of reference signal resources to perform channel measurement. The terminal device may report a set of beam measurement results in the CSI report, and this set of beam measurement results may be obtained by performing channel measurement based on the reference signal received from one of the plurality of reference signal resources, and the result of the channel measurement performed by the terminal device based on the reference signal received from this reference signal resource is optimal.

Therefore, during the channel measurement of the terminal device, the number of reference signal resources and the number of ports in each reference signal resource will affect the complexity of CSI estimation performed by the terminal device.

In addition, in the configuration signaling of the reference signal resource, different time domain behaviors may be indicated by different time domain behavior parameters. As an example but not a limitation, the time domain behavior may be periodic, semi-persistent (SP) and aperiodic (AP).

4. Beam measurement: the beam quality information is obtained by measuring the reference signal. The parameters used to measure beam quality include, but are not limited to, reference signal received power (RSRP). For example, beam quality may also be measured by reference signal receiving quality (RSRQ), signal-noise ratio (SNR), signal to interference plus noise ratio (SINR), channel quality indicator (CQI), and other parameters.

5. Cell: a cell is described by a higher layer from the perspective of resource management, mobility management or service unit. The coverage of each network device may be divided into one or more serving cells, and the serving cell may be regarded as consisting of some frequency domain resources.

It should be noted that the cell may be an area within the coverage range of the wireless network of the network device. In an embodiment of the present disclosure, different cells may correspond to different network devices. For example, the network device in cell #1 and the network device in cell #2 may be different network devices, such as a base station. That is to say, cell #1 and cell #2 may be managed by different base stations. In this case, it may be said that cell #1 and cell #2 do not share a station, or in other words, belong to different stations. The network device in cell #1 and the network device in cell #2 may also be different radio frequency processing units of the same base station, for example, a radio remote unit (RRU). That is to say, cell #1 and cell #2 may be managed by the same base station, have the same baseband processing unit and intermediate frequency processing unit, but have different radio frequency processing units. The present disclosure does not specifically limit this.

In order to better understand the method and device for reporting a beam measurement result according to the embodiments of the present disclosure, the communication system to which the embodiments of the present disclosure are applicable is first described below.

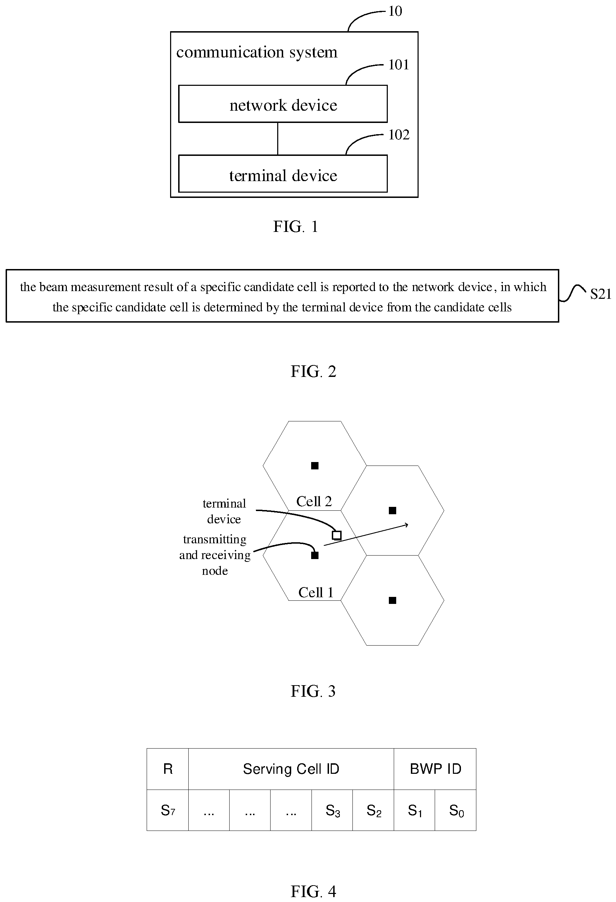

Referring to FIG. 1, FIG. 1 is a schematic diagram of the architecture of a communication system according to an embodiment of the present disclosure. The communication system may include, but is not limited to, a network device and a terminal device. The number and form of devices shown in FIG. 1 are only used as examples and do not constitute a limitation on the embodiments of the present disclosure. In actual applications, there may be two or more network devices and two or more terminal devices. The communication system 10 shown in FIG. 1 includes, for example, one network device 101 and one terminal device 102.

It should be noted that the technical solution of an embodiment of the present disclosure may be applied to various communication systems. For example: a long term evolution (LTE) system, a fifth generation (5G) mobile communication system, a 5G new radio (NR) system, or other future new mobile communication systems. It should also be noted that the sidelink in an embodiment of the present disclosure may also be called a side link or a direct link.

The network device 101 in an embodiment of the present disclosure is an entity on the network side for transmitting or receiving signals. For example, the network device 101 may be an evolved NodeB (eNB), a transmission reception point (TRP), a next generation NodeB (gNB) in an NR system, a base station in other future mobile communication systems, or an access node in a wireless fidelity (WiFi) system. The embodiments of the present disclosure do not limit the specific technology and specific device form adopted by the base station. The base station according to an embodiment of the present disclosure may include a central unit (CU) and a distributed unit (DU), in which the CU may also be referred to as a control unit. The CU-DU structure may be used to split the base station, such as the protocol layer of the base station, and the functions of some protocol layers are placed in the CU for centralized control, and the functions of the remaining part or all of the protocol layers are distributed in the DU, and the DU is centrally controlled by the CU.

The terminal device 102 in an embodiment of the present disclosure is an entity on the user side for receiving or transmitting signals, such as a mobile phone. The terminal device may also be referred to as a terminal device (terminal), user equipment (UE), mobile station (MS), mobile terminal device (MT), etc. The terminal device may be a car with communication function, a smart car, a mobile phone, a wearable device, a tablet computer (Pad), a computer with wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, etc. An embodiment of the present disclosure does not limit the specific technology and specific device form adopted by the terminal device.

It may be understood that the communication system described in an embodiment of the present disclosure is for the purpose of more clearly illustrating the technical solution of an embodiment of the present disclosure, and does not constitute a limitation on the technical solution according to an embodiment of the present disclosure. A person skilled in the art may know that, with the evolution of the system architecture and the emergence of new business scenarios, the technical solution according to an embodiment of the present disclosure is also applicable to similar technical problems.

The concept of L1/L2-centric inter-cell mobility was introduced in Release 17 (Rel-17). There are two scenarios: mTRP-like mode scenario and L1/L2 mobility scenario. The former does not involve switching of serving cells, while the latter involves switching of serving cells. Rel-17 only discusses the mTRP-like mode case, i.e., inter-cell beam management in Rel-17. In Release 18 (Rel-18) Mobility enhancement, it is hoped that L1/L2 mobility (L1/L2 based inter-cell mobility) may be supported.

In the L1/L2 based inter-cell mobility to be discussed in Release 18, it is hoped that the decision on whether to switch should be made based on the L1 measurement results (i.e., the beam measurement result), so it is necessary to consider supporting beam measurement of neighboring cells (candidate cells) and reporting of the beam measurement result.

In the related art, for reporting of the beam measurement result, the terminal device reports the beam measurement results of all candidate cells after performing beam measurement on the candidate cells, respectively, so that the network device may understand the network state and make a switching decision. However, the terminal device needs to frequently report the beam measurement results of the candidate cells, which is not conducive to energy saving of the terminal device and will occupy more uplink resources.

Based on this, an embodiment of the present disclosure provides a method for reporting the beam measurement result. On the basis that the network device may obtain the network state timely and make a switching decision timely based on the network state, it may save the power consumption of the terminal device and may also reduce the resource overhead caused by frequent reporting of beam measurement results.

The method and device for reporting a beam measurement result according to the present disclosure are described in detail below in conjunction with the accompanying drawings.

Referring to FIG. 2, FIG. 2 is a flowchart of a method for reporting the beam measurement result according to an embodiment of the present disclosure.

A shown in FIG. 2, the method is performed by a terminal device and may include but is not limited to the following steps.

S21: the beam measurement result of a specific candidate cell is reported to the network device, in which the specific candidate cell is determined by the terminal device from the candidate cells.

In the embodiments of the present disclosure, the terminal device reports the beam measurement result of the specific candidate cell to the network device. There may be multiple implementations. For example, in one implementation, the terminal device determines a specific candidate cell from one or more candidate cells, and then obtains the beam measurement result of the specific candidate cell, and then reports the beam measurement result of the specific candidate cell to the network device; in another implementation, the terminal device determines a specific candidate cell from one or more candidate cells, and obtains the beam measurement results of the candidate cells, and then only reports the beam measurement result of the specific candidate cell to the network device; in yet another implementation, the terminal device obtains the beam measurement results of one or more candidate cells, and then determines the specific candidate cell based on the beam measurement results of the one or more candidate cells, and then reports the beam measurement result of the specific candidate cell to the network device; and so on. The embodiments of the present disclosure do not limit this.

The terminal device obtains the beam measurement results of the candidate cells, in which the terminal device may obtain the beam measurement results of one or more candidate cells.

It may be understood that there may be one or more candidate cells. When there is one candidate cell, the terminal device may perform beam measurement on the candidate cell and obtain the beam measurement result of the candidate cell; when there are a plurality of candidate cells, the terminal device may perform beam measurement on the plurality of candidate cells and obtain the beam measurement result of each candidate cell.

Exemplarily, as shown in FIG. 3, the terminal device may perform beam measurement on the plurality of candidate cells, for example, beam measurement on candidate cell 2. The terminal device performs beam measurement on each candidate cell and obtains a beam measurement result of each candidate cell.

In a possible implementation, the terminal device performs beam measurement on one or more candidate cells, and after obtaining the beam measurement result of each candidate cell, a specific candidate cell may be determined from the candidate cells based on the beam measurement result.

The terminal device obtains the beam measurement result of the candidate cell and may determine that the candidate cell whose beam measurement result meets specific conditions is a specific candidate cell based on the indication of the network device or protocol agreement.

Exemplarily, the terminal device may determine a specific candidate cell based on the beam measurement result of the candidate cell according to the indication of the network device, and the network device may send a reporting configuration to the terminal device, in which the reporting configuration is used to indicate a reporting type based on an event. The terminal device reports the beam measurement result of the specific candidate cell to the network device, the terminal device may report the beam measurement result of the specific candidate cell that satisfies the event to the network device.

In an embodiment of the present disclosure, an event includes at least one of:
Event1, in which Event1 is a measurement result of a best beam of the candidate cells>a measurement result of a best beam of serving cells + a first offset value offset1;
Event2, in which Event2 is an average value of beam measurement results of the candidate cells > an average value of beam measurement results of the serving cells + a second offset value offset2;
Event3, in which Event3 is an average value or a maximum value of the beam measurement results of the candidate cells > a threshold; or
Event4, in which Event4 is that first N best measurement results are the beam measurement results of the candidate cells, and N is a positive integer.

In an embodiment of the present disclosure, in a case that the terminal device determines that a certain candidate cell satisfies Event 1, the terminal device determines that the candidate cell is the specific candidate cell, and reports the beam measurement result of the specific candidate cell to the network device. That is, in the case that it is determined that the measurement result of the best beam of the candidate cells > the measurement result of the best beam of the serving cells + the first offset value offset1, the candidate cell is determined to be the specific candidate cell, and the beam measurement result of the specific candidate cell is reported to the network device.

In an embodiment of the present disclosure, in a case that the terminal device determines that a certain candidate cell satisfies Event2, the terminal device determines that the candidate cell is the specific candidate cell, and reports the beam measurement result of the specific candidate cell to the network device. That is, in a case that it is determined that the average value of the beam measurement results of the candidate cells > the average value of the beam measurement results of the serving cells + the second offset value offset2, the candidate cell is determined to be the specific candidate cell, and the beam measurement result of the specific candidate cell is reported to the network device.

In an embodiment of the present disclosure, in a case that the terminal device determines that a certain candidate cell satisfies Event 3, the terminal device determines that the candidate cell is the specific candidate cell, and reports the beam measurement result of the specific candidate cell to the network device. That is, in a case that it is determined that the average value or the maximum value of the beam measurement results of the candidate cells is greater than a threshold, the candidate cell is determined to be the specific candidate cell, and the beam measurement result of the specific candidate cell is reported to the network device.

In an embodiment of the present disclosure, in the case that the terminal device determines that a certain candidate cell satisfies Event 4, the terminal device determines that the candidate cell is the specific candidate cell, and reports the beam measurement result of the specific candidate cell to the network device. That is, in the case that first N best measurement results are the measurement results of the candidate cells, and N is a positive integer, the candidate cell is determined to be the specific candidate cell, and the beam measurement result of the specific candidate cell is reported to the network device.

It should be noted that the above embodiments are not exhaustive but are only illustrations of some embodiments, and the above embodiments may be implemented individually or in combination. The above embodiments are only for illustration and are not intended to be specific limitations on the protection scope of the embodiments of the present disclosure.

In another possible implementation, the network device sends indication information to the terminal device, in which the indication information is used to indicate the specific candidate cell. Thus, the terminal device receives the indication information sent by the network device and may determine the specific candidate cell based on the indication information, and then obtain the beam measurement result of the specific candidate cell, or obtain the beam measurement results of some or all candidate cells including the specific candidate cell, and report the beam measurement result of the specific candidate cell to the network device.

The indication information may be medium access control control element (MAC CE) information, the MAC CE information is used to indicate activation of a specific candidate cell, or deactivation of a specific candidate cell, or to indicate measurement resources of the specific candidate cell associated with the reporting configuration.

For example, as shown in FIG. 4, a specific candidate cell that needs to be measured and reported is dynamically activated/deactivated via MAC CE information; in which Serving Cell ID is the serving cell ID, BWP ID is the Band width Part ID. Sᵢ corresponds to each candidate cell, and the corresponding relationship may be pre-configured or by default, such as corresponding to the size of the candidate cell ID. Sᵢ=0 means the measurement is not needed, and the candidate cell does not need to be measured, otherwise it means measurement is needed. As shown in FIG. 4, R represents a reserved bit.

In an exemplary embodiment, the indication information of the network device may be that the network device sends MAC CE information to the terminal device, and dynamically activates or deactivates the measurement and reporting of the candidate cell via the MAC CE information, in which the activated candidate cell is the specific candidate cell that requires beam measurement and beam measurement result reporting.

In another exemplary embodiment, the indication information of the network device may be an MAC CE sent by the network device to the terminal device, in which the MAC CE indicates the association between the reporting configuration and the measurement resources, for example, the MAC CE configures the reference signal resource set of the specific candidate cell associated with the reporting configuration, so as to report the beam measurement result of the specific candidate cell according to the reporting configuration.

It may be understood that in the beam measurement in the related technology, the association relationship between the reporting configuration (CSI-ReportConfig) and the measurement resource (CSI-Resource) is that one reporting configuration CSI-ReportConfig corresponds to one reporting configuration ID (CSI-Resource ID), which is used to associate the reference signal for the measurement and reporting. This association relationship is configured via Radio Resource Control (RRC) signaling and cannot be changed. In some implementations, one CSI-ReportConfig may only correspond to one CSI-Resource ID.

In an embodiment of the present disclosure, the association relationship between the reporting configuration (CSI-ReportConfig) and the measurement resource (CSI-Resource) is dynamically configured, which allows one reporting configuration to be associated with a plurality of reference signals for the measurement and reporting, in which the associated plurality of reference signals for the measurement and reporting may be reference signals of one or more candidate cells, or may also be reference signals of a serving cell and a candidate cell, etc. For example, one CSI-ReportConfig may be allowed to correspond to a plurality of CSI-Resource IDs.

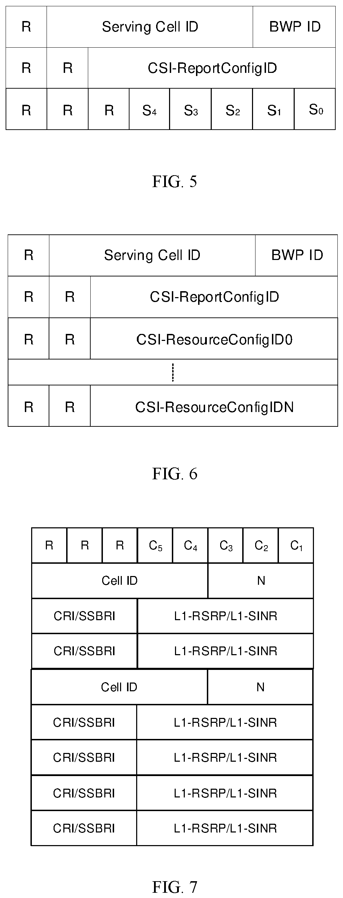

For example, as shown in FIG. 5, the association relationship between the reporting configuration and the measurement reference signal is changed dynamically, and one reporting configuration is allowed to be associated with one or more reference signal resource sets. These reference signal resource sets may be reference signals of different cells. In this way, the specific candidate cell that needs the measurement and reporting may be changed dynamically.

Alternatively, as shown in FIG. 6, the association relationship between the reporting configuration and the measurement reference signal may be changed dynamically, and one reporting configuration may be allowed to associate with a plurality of reference signal resource sets. These reference signal resource sets may be reference signals of different cells. In this way, the specific candidate cell that needs the measurement and reporting may be changed dynamically.

In an embodiment of the present disclosure, the terminal device reports the beam measurement result of the specific candidate cell to the network device, and may report with a designated reporting resource. For example, the measurement and reporting of each specific candidate cell is configured with a separate reporting resource, or the measurement and reporting of all candidate cells correspond to shared reporting resources, etc.

In an embodiment of the present disclosure, the network device configures that each candidate cell corresponds to a separate reporting resource or the candidate cells correspond to a shared reporting resource, and the terminal device may determine the reporting resource based on the configuration of the network device. The network device may send a reporting configuration to the terminal device, and the reporting configuration is used to configure that each candidate cell corresponds to a separate reporting resource or the candidate cells correspond to a shared reporting resource.

It should be noted that the network device configures that each candidate cell corresponds to a separate reporting resource, or the candidate cells correspond to a shared reporting resource, and may configure a separate reporting resource corresponding to each candidate cell, or a shared reporting resource corresponding to all candidate cells for the source cell (servicing cell) or the cell accessed by the terminal device.

In a case that each candidate cell corresponds to a separate reporting resource, the terminal device may report the beam measurement result of the specific candidate cell with the separately corresponding reporting resource. Based on this, the network device may determine that the beam measurement result reported by the terminal device is the beam measurement result of the specific candidate cell according to the reporting resource used to receive the beam measurement result of the specific candidate cell.

In a case that the candidate cells correspond to a shared reporting resource, the terminal device may report the beam measurement result of the specific candidate cell with the shared reporting resource. In this case, the terminal device may include a cell identity in the reporting format of reporting the beam measurement result of the specific candidate cell, and the cell identity is used to indicate the specific candidate cell. Based on this, the network device may determine that the beam measurement result reported by the terminal device is the beam measurement result of the specific candidate cell according to the cell identity.

In an embodiment of the present disclosure, the terminal device determines the specific candidate cell, and reports the beam measurement result of the specific candidate cell to the network device by the reporting resource. If the specific candidate cell is not determined, the reporting resource is idle. In order to avoid wasting resources, the reporting resource may also be multiplexed for other uplink transmissions, but the priority is lower than the reporting of the beam measurement result.

In a case that the reporting resource is multiplexed for other uplink transmissions, the terminal device may also include an identifier in the reporting format of reporting the beam measurement result of the specific candidate cell, and the identifier is used to indicate that the current data is the beam measurement result, so that the network device determines whether the transmitted data is the beam measurement result or other uplink transmission.

In an embodiment of the present disclosure, in order to inform the network device whether the beam measurement result of the specific candidate cell is transmitted by the reporting resource or the reporting resource is multiplexed for other uplink transmissions, an identifier is introduced at the front end. When the identifier is a specific value, it means that the beam measurement result is transmitted by the reporting resource.

In an embodiment of the present disclosure, the terminal device reports the beam measurement result of the specific candidate cell to the network device, and a medium access control control element (MAC CE) is sent to the network device, in which the MAC CE is used to indicate the beam measurement result of the specific candidate cell.

It is noted that the network device may not configure the reporting resource for the terminal device, and the terminal device may report with the most recent physical uplink shared control channel (PUSCH) after obtaining the beam measurement result or other PUSCH. In order to enable the network device to identify the resource, a new MAC CE is defined for reporting the beam measurement result.

A possible MAC CE format is shown in FIG. 7. Cᵢ is used to indicate whether the beam measurement result of a candidate cell (neighboring cell) exists. N indicates the number of the candidate cells whose beam measurement results are reported. Among them, CRI is channel state information reference signal (CSI-RS) resource indicator (CRI), SSBRI is synchronization signal block (SSB) resource indicator (SSBRI). L1-RSRP is the layer-1 reference signal received power, also known as the received power of the reference signal, and L1-SINR is layer-1 signal to interference plus noise ratio, also known as a signal to interference plus noise ratio.

In an embodiment of the present disclosure, the terminal device may obtain the reporting resource by sending a scheduling request to the network device.

Exemplarily, the terminal device may use a scheduling request resource to request the network device that the reporting resource is used for reporting the beam measurement result of the specific candidate cell.

The scheduling request resource used by the terminal device may be a resource that the network device has configured to the terminal device in the relevant technology, or the network device may also allocate a dedicated scheduling request resource for reporting the beam measurement result. Thus, the terminal device may send the scheduling request to the network device with the scheduling request resource, to indicate the network device to configure the reporting resource.

In an embodiment of the present disclosure, the terminal device reports the beam measurement result of the specific candidate cell to the network device. When there are a plurality of specific candidate cells, the terminal device may also report cell identities of the plurality of specific candidate cells to the network device to distinguish different candidate cells.

By implementing the embodiments of the present disclosure, the terminal device reports the beam measurement result of the specific candidate cell to the network device, in which the specific candidate cell is determined by the terminal device from the candidate cells. Thus, on the basis that the network device may obtain the network state timely and make a switching decision timely according to the network state, the power consumption of the terminal device may be saved, and the resource overhead caused by the frequent reporting of beam measurement results may also be reduced.

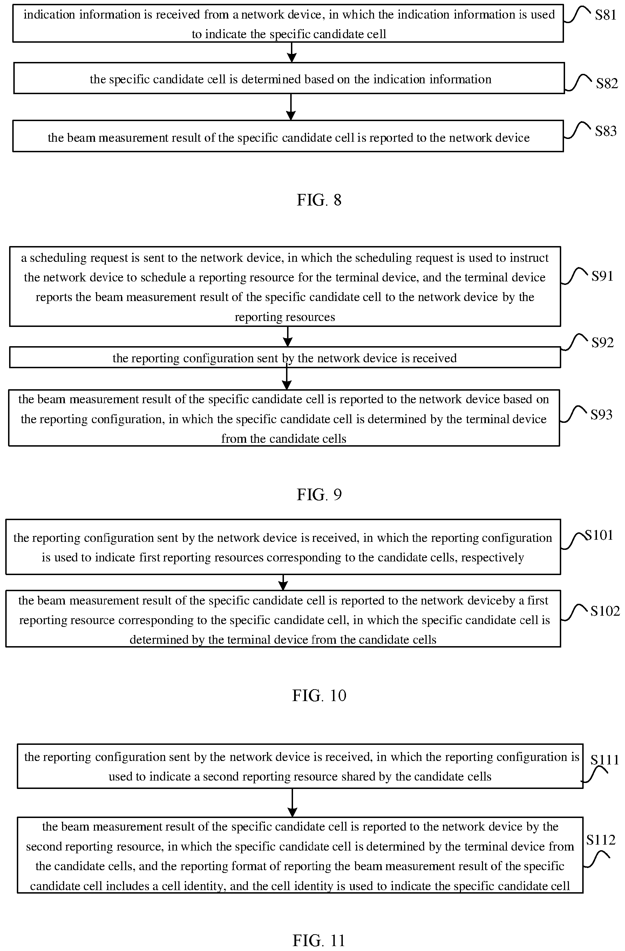

Referring to FIG. 8, FIG. 8 is a flowchart of another method for reporting the beam measurement result according to an embodiment of the present disclosure.

As shown in FIG. 8, the method is executed by a terminal device, and the method may include but is not limited to the following steps.

S81: indication information is received from a network device, in which the indication information is used to indicate the specific candidate cell.

In an embodiment of the present disclosure, the terminal device receives the indication information from the network device after obtaining the beam measurement results of the candidate cells, or before obtaining the beam measurement results of the candidate cells, or during the process of obtaining the beam measurement results of the candidate cells. The embodiments of the present disclosure do not limit this.

The indication information may be MAC CE information, and the MAC CE information is used to indicate activation of the specific candidate cell, or deactivation of the specific candidate cell, or to indicate a measurement resource of the specific candidate cell associated with the reporting configuration.

In an exemplary embodiment, the indication information of the network device may be that the network device sends MAC CE information to the terminal device, and dynamically activates or deactivates the specific candidate cell that needs to perform beam measurement and report the beam measurement result via the MAC CE information. The activated candidate cell is the specific candidate cell that needs to perform beam measurement and report the beam measurement result.

Exemplarily, as shown in FIG. 4, the specific candidate cell that needs to perform measurement and reporting is dynamically activated/deactivated via MAC CE information. Sᵢ corresponds to each candidate cell, the corresponding relationship may be pre-configured or by default, such as corresponding with the size of the candidate cell ID. Sᵢ=0 means the measurement is not needed, and the candidate cell does not need to perform measurement, otherwise it means that measurement is needed.

In another exemplary embodiment, the indication information of the network device may be an MAC CE sent by the network device to the terminal device, in which the MAC CE indicates the association relationship between the reporting configuration and the measurement resource, for example the MAC CE configures the reference signal resource set of the specific candidate cell associated with the reporting configuration, so as to indicate the terminal device to determine the specific candidate cell, to report the beam measurement result of the specific candidate cell according to the reporting configuration.

It may be understood that in the beam measurement in the related technology, the association relationship between the reporting configuration (CSI-ReportConfig) and the measurement resource (CSI-Resource) is that the CSI-ReportConfig will include one CSI-Resource ID for associating the reference signal for the measurement and reporting. This association relationship is configured via an RRC signaling and cannot be changed. Moreover, one CSI-ReportConfig may only include one CSI-Resource ID.

In an embodiment of the present disclosure, the association relationship between the reporting configuration (CSI-ReportConfig) and the measurement resource (CSI-Resource) is dynamically configured, which allows one reporting configuration to be associated with a plurality of reference signals for the measurement and reporting, in which the associated plurality of reference signals for the measurement and reporting may be reference signals of one or more candidate cells, or may also be reference signals of a serving cell and a candidate cell, etc. For example, one CSI-ReportConfig may be allowed to correspond to a plurality of CSI-Resource IDs.

For example, as shown in FIG. 5, the association relationship between the reporting configuration and the measurement reference signal is changed dynamically, and one reporting configuration is allowed to be associated with one or more reference signal resource sets. These reference signal resource sets may be reference signals of different cells. In this way, the specific candidate cell that needs the measurement and reporting may be changed dynamically.

Alternatively, as shown in FIG. 6, the association relationship between the reporting configuration and the measurement reference signal may be changed dynamically, and one reporting configuration may be allowed to be associated with a plurality of reference signal resource sets. These reference signal resource sets may be reference signals of different cells. In this way, the specific candidate cell that needs the measurement and reporting may be changed dynamically.

S82: the specific candidate cell is determined based on the indication information.

S83: the beam measurement result of the specific candidate cell is reported to the network device.

In an embodiment of the present disclosure, the terminal device receives indication information from the network device, and the indication information is used to indicate the specific candidate cell. Based on this, the terminal device may determine the specific candidate cell based on the indication information.

In a case that the indication information MAC CE information is used to indicate activation of a certain specific candidate cell, the terminal device may determine that the specific candidate cell is an activated candidate cell.

In a case that the indication information MAC CE information is used to indicate that the reporting configuration is associated with the measurement resource of a certain candidate cell, the terminal device may determine that the specific candidate cell is a candidate cell whose measurement resource is associated with the reporting configuration.

In the embodiments of the present disclosure, the relevant description of S82 may refer to the relevant description in the above embodiments, and the same content will not be repeated here.

In an embodiment of the present disclosure, the terminal device reports the beam measurement result of the specific candidate cell to the network device. In a case that there are a plurality of specific candidate cells, the terminal device may also report the cell identities of the plurality of specific candidate cells to the network device to distinguish different candidate cells.

By implementing the embodiments of the present disclosure, the terminal device receives indication information from the network device, in which the indication information is used to indicate the specific candidate cell, determines the specific candidate cell based on the indication information, and reports the beam measurement result of the specific candidate cell to the network device. Thus, on the basis that the network device may obtain the network state timely and make a switching decision timely according to the network state, the power consumption of the terminal device may be saved, and the resource overhead caused by the frequent reporting of beam measurement results may also be reduced.

Referring to FIG. 9, FIG. 9 is a flowchart of another method for reporting the beam measurement result according to an embodiment of the present disclosure.

As shown in FIG. 9, the method is executed by a terminal device, and the method may include but is not limited to the following steps.

S91: a scheduling request is sent to the network device, in which the scheduling request is used to indicate the network device to schedule a reporting resource for the terminal device, and the terminal device reports the beam measurement result of the specific candidate cell to the network device by the reporting resources.

In an embodiment of the present disclosure, the terminal device sends a scheduling request to the network device after obtaining the beam measurement results of the candidate cells and determining the specific candidate cell, or before obtaining the beam measurement results of the candidate cells and determining the specific candidate cell, or during the process of obtaining the beam measurement results of the candidate cells and determining the specific candidate cell. The embodiments of the present disclosure do not limit this.

The terminal device sends a scheduling request to the network device, to request the network device to schedule the reporting resource for the terminal device, so as to report the beam measurement result of the specific candidate cell to the network device by the reporting resource.

In an embodiment of the present disclosure, the terminal device sends the scheduling request to the network device, and the scheduling request may be sent with the scheduling request resource for sending the scheduling request in the related technology. Alternatively, the network device may allocate a dedicated scheduling request resource for sending the scheduling request, and send the allocated scheduling request resource to the terminal device, and the terminal device may use the dedicated scheduling request resource to send the scheduling request.

S92: the reporting configuration sent by the network device is received.

S93: the beam measurement result of the specific candidate cell is reported to the network device based on the reporting configuration, in which the specific candidate cell is determined by the terminal device from the candidate cells.

In an embodiment of the present disclosure, the terminal device sends a scheduling request to the network device, to request the network device to schedule the reporting resource for the terminal device. After receiving the scheduling request sent by the terminal device, the network device may send the reporting configuration to the terminal device. The reporting configuration may indicate the reporting resource, so that the terminal device may report the beam measurement result of the specific candidate cell to the network device by the reporting resource according to the reporting configuration.

In the embodiments of the present disclosure, the method for the terminal device to determine the specific candidate cell from the candidate cells may refer to the relevant description in the above embodiments, which will not be repeated here.

By implementing the embodiments of the present disclosure, the terminal device sends the scheduling request to the network device, receives the reporting configuration sent by the network device, and reports the beam measurement result of the specific candidate cell to the network device according to the reporting configuration, in which the specific candidate cell is determined by the terminal device from the candidate cells. Thus, on the basis that the network device may obtain the network state timely and make a switching decision timely according to the network state, the power consumption of the terminal device may be saved, and the resource overhead caused by the frequent reporting of the beam measurement results may also be reduced.

Referring to FIG. 10, FIG. 10 is a flowchart of another method for reporting the beam measurement result according to an embodiment of the present disclosure.

As shown in FIG. 10, the method is executed by a terminal device, and the method may include but is not limited to the following steps.

S101: the reporting configuration sent by the network device is received, in which the reporting configuration is used to indicate first reporting resources corresponding to the candidate cells, respectively.

In an embodiment of the present disclosure, the terminal device receives the reporting configuration sent by the network device after obtaining the beam measurement results of the candidate cells and determining the specific candidate cell, or before obtaining the beam measurement results of the candidate cells and determining the specific candidate cell, or during the process of obtaining the beam measurement results of the candidate cells and determining the specific candidate cell. The embodiments of the present disclosure do not limit this.

S102: the beam measurement result of the specific candidate cell is reported to the network device by a first reporting resource corresponding to the specific candidate cell, in which the specific candidate cell is determined by the terminal device from the candidate cells.

In an embodiment of the present disclosure, the terminal device obtains the beam measurement result of the candidate cell, determines the specific candidate cell, and in a case that the reporting configuration sent by the network device is received, reports the beam measurement result of the specific candidate cell according to the reporting configuration.

The reporting configuration is used to indicate the first reporting resource corresponding to each candidate cell, so that the terminal device reports the beam measurement result of the specific candidate cell to the network device by the first reporting resource corresponding to the specific cell, and the network device may determine the specific candidate cell based on the first reporting resource, and determine that the beam measurement result reported by the terminal device is the beam measurement result of the specific candidate cell.

In the embodiments of the present disclosure, the method for the terminal device to determine the specific candidate cell from the candidate cells may refer to the relevant description in the above embodiments, which will not be repeated here.

By implementing an embodiment of the present disclosure, the terminal device receives the reporting configuration sent by the network device, in which the reporting configuration is used to indicate the first reporting resource corresponding to each candidate cell, and reports the beam measurement result of the specific candidate cell to the network device by the first reporting resource corresponding to the specific candidate cell, in which the specific candidate cell is determined by the terminal device from the candidate cells. Thus, on the basis that the network device may obtain the network state timely and make a switching decision timely according to the network state, the power consumption of the terminal device may be saved, and the resource overhead caused by the frequent reporting of the beam measurement results may also be reduced.

Referring to FIG. 11, FIG. 11 is a flowchart of another method for reporting the beam measurement result according to an embodiment of the present disclosure.

As shown in FIG. 11, the method is executed by a terminal device, and the method may include but is not limited to the following steps.

S111: the reporting configuration sent by the network device is received, in which the reporting configuration is used to indicate a second reporting resource shared by the candidate cells.

In an embodiment of the present disclosure, the terminal device receives the reporting configuration sent by the network device after obtaining the beam measurement results of the candidate cells and determining the specific candidate cell, or before obtaining the beam measurement results of the candidate cells and determining the specific candidate cell, or during the process of obtaining the beam measurement results of the candidate cells and determining the specific candidate cell. The embodiments of the present disclosure do not limit this.

S112: the beam measurement result of the specific candidate cell is reported to the network device by the second reporting resource, in which the specific candidate cell is determined by the terminal device from the candidate cells, and the reporting format of reporting the beam measurement result of the specific candidate cell includes a cell identity, and the cell identity is used to indicate the specific candidate cell.

In an embodiment of the present disclosure, the terminal device obtains the beam measurement results of the candidate cells, determines the specific candidate cell, and in a case that the reporting configuration sent by the network device is received, reports the beam measurement result of the specific candidate cell according to the reporting configuration.

The reporting configuration is used to indicate the second reporting resource shared by the candidate cells, and the terminal device may report the beam measurement result of the specific candidate cell with the shared second reporting resource. In this case, the terminal device may include the cell identity in the reporting format of reporting the beam measurement result of the specific candidate cell, and the cell identity is used to indicate the specific candidate cell. Based on this, the network device may determine that the beam measurement result reported by the terminal device is the beam measurement result of the specific candidate cell according to the cell identity.

In an embodiment of the present disclosure, the terminal device determines the specific candidate cell, and reports the beam measurement result of the specific candidate cell to the network device by the second reporting resource. In a case that the specific candidate cell is not determined, the second reporting resource is idle. In order to avoid wasting resources, the second reporting resource may also be multiplexed for other uplink transmissions, but the priority is lower than the reporting of the beam measurement result.

In a case that the second reporting resource is multiplexed for other uplink transmissions, the terminal device may further include an identifier in the reporting format of reporting the beam measurement result of the specific candidate cell, and the identifier is used to indicate that the reported beam measurement result is the beam measurement result of the specific candidate cell, so that the network device may determine whether the beam measurement result of the specific candidate cell is transmitted by the second reporting resource or other uplink transmissions is transmitted by the second reporting resource.

In an embodiment of the present disclosure, in order to inform the network device whether the beam measurement result of the specific candidate cell is transmitted by the second reporting resource or other uplink transmissions is transmitted by the second reporting resource, an identifier is introduced at the front end. When the identifier is a specific value, it indicates that the beam measurement result is transmitted with the resource.

In the embodiments of the present disclosure, the method for the terminal device to determine the specific candidate cell from the candidate cells may refer to the relevant description in the above embodiments, which will not be repeated here.

By implementing an embodiment of the present disclosure, the terminal device receives the reporting configuration sent by the network device, the reporting configuration is used to indicate the second reporting resource shared by the candidate cells, and reports the beam measurement result of the specific candidate cell to the network device by the second reporting resource, and the specific candidate cell is determined by the terminal device from the candidate cells. Thus, on the basis that the network device may obtain the network state timely and make a switching decision timely according to the network state, the power consumption of the terminal device may be saved, and the resource overhead caused by the frequent reporting of the beam measurement results may also be reduced.

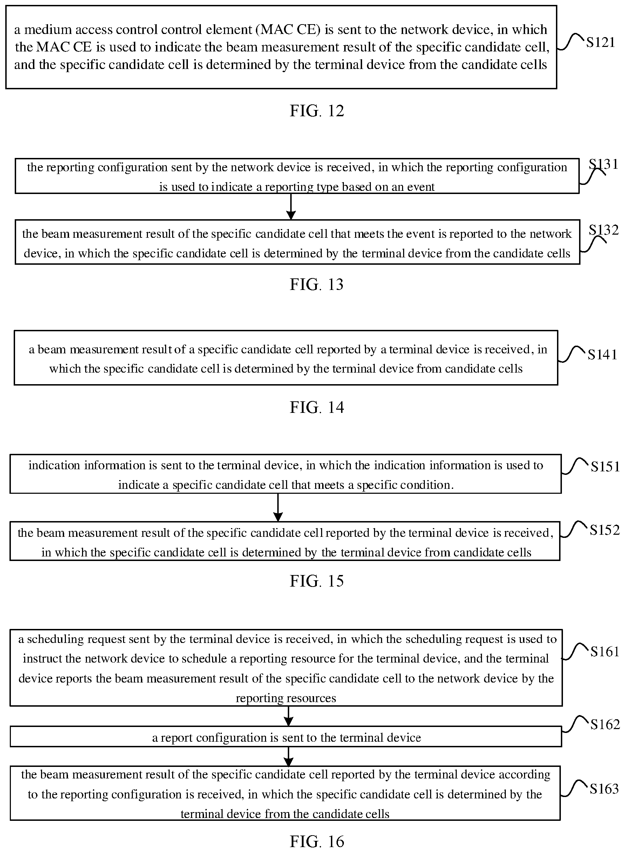

Referring to FIG. 12, FIG. 12 is a flowchart of another method for reporting the beam measurement result according to an embodiment of the present disclosure.

As shown in FIG. 12, the method is executed by a terminal device, and the method may include but is not limited to the following steps.

S121: a medium access control control element MAC CE is sent to the network device, in which the MAC CE is used to indicate the beam measurement result of the specific candidate cell, and the specific candidate cell is determined by the terminal device from the candidate cells.

In the embodiments of the present disclosure, the method for the terminal device to determine the specific candidate cell from the candidate cells may refer to the relevant description in the above embodiments, which will not be repeated here.

In an embodiment of the present disclosure, after obtaining the beam measurement results of the candidate cells and determining the specific candidate cell, the beam measurement result of the specific candidate cell may be reported to the network device, and the medium access control control element (MAC CE) may be sent to the network device, in which the MAC CE is used to indicate the beam measurement result of the specific candidate cell.

It is noted that the network device may not configure the reporting resource for the terminal device, and the terminal device may report with the most recent PUSCH after obtaining the beam measurement result or other PUSCH. In order to enable the network device to identify the resource, a new MAC CE is defined for reporting the beam measurement result.

A possible MAC CE format is shown in FIG. 7. Cᵢ is used to indicate whether the beam measurement result of a certain candidate cell (neighboring cell) exists. N indicates the number of the candidate cells whose beam measurement results are reported. CRI is CSI-RS resource indicator (CRI), SSBRI is SSB resource indicator (SSBRI). L1-RSRP is the layer-1 reference signal received power, also known as the received power of the reference signal, and L1-SINR is layer-1 signal to interference plus noise ratio, also known as a signal to interference plus noise ratio.

By implementing an embodiment of the present disclosure, the terminal device sends a medium access control control element (MAC CE) to the network device, in which the MAC CE is used to indicate the beam measurement result of the specific candidate cell, and the specific candidate cell is determined by the terminal device from the candidate cells. Thus, on the basis that the network device may obtain the network state timely and make a switching decision timely according to the network state, the power consumption of the terminal device may be saved, and the resource overhead caused by the frequent reporting of the beam measurement results may also be reduced.

Referring to FIG. 13, FIG. 13 is a flowchart of another method for reporting the beam measurement result according to an embodiment of the present disclosure.

As shown in FIG. 13, the method is executed by a terminal device, and the method may include but is not limited to the following steps.

S131: the reporting configuration sent by the network device is received, in which the reporting configuration is used to indicate a reporting type based on an event.

In an embodiment of the present disclosure, the terminal device receives the reporting configuration sent by the network device after obtaining the beam measurement results of the candidate cells and determining the specific candidate cell, or before obtaining the beam measurement results of the candidate cells and determining the specific candidate cell, or during the process of obtaining the beam measurement results of the candidate cells and determining the specific candidate cell. The embodiments of the present disclosure do not limit this.

S132: the beam measurement result of the specific candidate cell that meets the event is reported to the network device, in which the specific candidate cell is determined by the terminal device from the candidate cells.

In an embodiment of the present disclosure, the terminal device receives a reporting configuration sent by the network device, in which the reporting configuration is used to indicate a reporting type based on the event.

The terminal device determines the specific candidate cell from the candidate cells, and may determine that the candidate cell that satisfies the event is the specific candidate cell.

In an embodiment of the present disclosure, an event includes at least one of:
Event1, in which Event1 is a measurement result of a best beam of the candidate cells>a measurement result of a best beam of serving cells + a first offset value offset1;
Event2, in which Event2 is an average value of beam measurement results of the candidate cells > an average value of beam measurement results of the serving cells + a second offset value offset2;
Event3, in which Event3 is an average value or a maximum value of the beam measurement results of the candidate cells > a threshold; or
Event4, in which Event4 is that first N best measurement results are the beam measurement results of the candidate cells, and N is a positive integer.

In an embodiment of the present disclosure, in a case that the terminal device determines that a certain candidate cell satisfies Event 1, the terminal device determines that the candidate cell is the specific candidate cell, and reports the beam measurement result of the specific candidate cell to the network device. That is, in the case that it is determined that the measurement result of the best beam of the candidate cells > the measurement result of the best beam of the serving cells + the first offset value offset1, the candidate cell is determined to be the specific candidate cell, and the beam measurement result of the specific candidate cell is reported to the network device.

In an embodiment of the present disclosure, in a case that the terminal device determines that a certain candidate cell satisfies Event2, the terminal device determines that the candidate cell is the specific candidate cell, and reports the beam measurement result of the specific candidate cell to the network device. That is, in a case that it is determined that the average value of the beam measurement results of the candidate cells > the average value of the beam measurement results of the serving cells + the second offset value offset2, the candidate cell is determined to be the specific candidate cell, and the beam measurement result of the specific candidate cell is reported to the network device.

In an embodiment of the present disclosure, in a case that the terminal device determines that a certain candidate cell satisfies Event 3, the terminal device determines that the candidate cell is the specific candidate cell, and reports the beam measurement result of the specific candidate cell to the network device. That is, in a case that it is determined that the average value or the maximum value of the beam measurement results of the candidate cells is greater than a threshold, the candidate cell is determined to be the specific candidate cell, and the beam measurement result of the specific candidate cell is reported to the network device.

In an embodiment of the present disclosure, in the case that the terminal device determines that a certain candidate cell satisfies Event 4, the terminal device determines that the candidate cell is the specific candidate cell, and reports the beam measurement result of the specific candidate cell to the network device. That is, in the case that first N best measurement results are the measurement results of the candidate cells, and N is a positive integer, the candidate cell is determined to be the specific candidate cell, and the beam measurement result of the specific candidate cell is reported to the network device.

It should be noted that the above embodiments are not exhaustive but are only illustrations of some embodiments, and the above embodiments may be implemented individually or in combination. The above embodiments are only for illustration and are not intended to be specific limitations on the protection scope of the embodiments of the present disclosure.

In an embodiment of the present disclosure, in the reporting configuration, the reporting type may also include periodic, semi-static, and non-periodic reporting. The reporting type based on the event is included. For example, when the reporting type (reportType) in the reporting configuration (CSI-ReportConfig) is configured as eventTriggerd, it indicates that the reporting method is the reporting type based on the event.

Identities may be given for different events. When eventTriggerd in reportType is given as eventID=0, it means that the beam measurement result will be reported only when the measurement result of the candidate cell meets Event1.

By implementing an embodiment of the present disclosure, the terminal device receives the reporting configuration sent by the network device, the reporting configuration is used to indicate the reporting type based on the event, and reports the beam measurement result of the specific candidate cell that meets the event to the network device, in which the specific candidate cell is determined by the terminal device from the candidate cells. Thus, on the basis that the network device may obtain the network state timely and make a switching decision timely according to the network state, the power consumption of the terminal device may be saved, and the resource overhead caused by the frequent reporting of beam measurement results may also be reduced.

Referring to FIG. 14, FIG. 14 is a flowchart of another method for reporting the beam measurement result according to an embodiment of the present disclosure.

As shown in FIG. 14, the method is executed by a network device, and the method may include but is not limited to the following steps.

S141: a beam measurement result of a specific candidate cell reported by a terminal device is received, in which the specific candidate cell is determined by the terminal device from candidate cells.

In an embodiment of the present disclosure, the terminal device determines the specific candidate cell from the candidate cells. The relevant description of the above-mentioned terminal side embodiment may be referred, and the same content will not be repeated here.

In an embodiment of the present disclosure, the terminal device performs beam measurement on one or more candidate cells, obtains the beam measurement result of each candidate cell, determines the specific candidate cell, and then reports the beam measurement result of the specific candidate cell to the network device.

The terminal device reports the beam measurement result of a specific candidate cell to the network device with a designated reporting resource, so that the network device receives the beam measurement result of the specific candidate cell reported by the terminal device by the reporting resource. For example, a separate reporting resource is configured for the measurement report of each specific candidate cell, or the reporting resources of all candidate cells correspond to a shared reporting resource, etc.

In an embodiment of the present disclosure, the network device may configure the terminal device with the separate reporting resource corresponding to each candidate cell, or a shared reporting resource corresponding to the specific candidate cell, and the terminal device may determine the reporting resource based on the configuration of the network device. The network device may send a reporting configuration to the terminal device, and the reporting configuration is used to indicate that the measurement report of each specific candidate cell is configured with a separate reporting resource, or that the reporting resources of all candidate cells correspond to a shared reporting resource.

It should be noted that the network device configures that each candidate cell corresponds to a separate reporting resource, or the candidate cells correspond to a shared reporting resource, and may configure a separate reporting resource corresponding to each candidate cell, or a shared reporting resource corresponding to all candidate cells for the source cell (servicing cell) or the cell accessed by the terminal device.

In the case where each specific candidate cell corresponds to a separate reporting resource, the terminal device may report the beam measurement result of the specific candidate cell with the separate reporting resource. Based on this, the network device may determine that the beam measurement result reported by the terminal device is the beam measurement result of the specific candidate cell according to the reporting resource used to receive the beam measurement result of the specific candidate cell.

In a case that the specific candidate cell corresponds to a shared reporting resource, the terminal device may report the beam measurement result of the specific candidate cell with the shared reporting resource. In this case, the terminal device may include a cell identity in the reporting format of reporting the beam measurement result of the specific candidate cell, and the cell identity is used to indicate the specific candidate cell. Based on this, the network device may determine that the beam measurement result reported by the terminal device is the beam measurement result of the specific candidate cell according to the cell identity.

In an embodiment of the present disclosure, the terminal device determines the specific candidate cell, and reports the beam measurement result of the specific candidate cell to the network device by the reporting resource. If the specific candidate cell is not determined, the reporting resource is idle. In order to avoid wasting resources, the reporting resource may also be multiplexed for other uplink transmissions, but the priority is lower than the reporting of the beam measurement result.

In a case that the reporting resource is multiplexed for other uplink transmissions, the terminal device may also include an identifier in the reporting format of reporting the beam measurement result of the specific candidate cell, and the identifier is used to indicate that the current data is the beam measurement result, so that the network device determines whether the transmitted data is the beam measurement result or other uplink transmission.

In an embodiment of the present disclosure, in order to inform the network device whether the beam measurement result of the specific candidate cell is transmitted by the reporting resource or the reporting resource is multiplexed for other uplink transmissions, an identifier is introduced at the front end. When the identifier is a specific value, it means that the beam measurement result is transmitted by the reporting resource.

In an embodiment of the present disclosure, the terminal device reports the beam measurement result of the specific candidate cell to the network device, and a medium access control control element (MAC CE) is sent to the network device, in which the MAC CE is used to indicate the beam measurement result of the specific candidate cell.

It is noted that the network device may not configure the reporting resource for the terminal device, and the terminal device may report with the most recent physical uplink shared control channel (PUSCH) after obtaining the beam measurement result or other PUSCH. In order to enable the network device to identify the resource, a new MAC CE is defined for reporting the beam measurement result.

A possible MAC CE format is shown in FIG. 7. Cᵢ is used to indicate whether the beam measurement result of a candidate cell (neighboring cell) exists. N indicates the number of the candidate cells whose beam measurement results are reported. Among them, CRI is channel state information reference signal (CSI-RS) resource indicator (CRI), SSBRI is synchronization signal block (SSB) resource indicator (SSBRI). L1-RSRP is the layer-1 reference signal received power, also known as the received power of the reference signal, and L1-SINR is layer-1 signal to interference plus noise ratio, also known as a signal to interference plus noise ratio.

In an embodiment of the present disclosure, the terminal device may obtain the reporting resource by sending a scheduling request to the network device.

Exemplarily, the terminal device may use a scheduling request resource to request the network device that the reporting resource is used for reporting the beam measurement result of the specific candidate cell.

The scheduling request resource used by the terminal device may be a resource that the network device has configured to the terminal device in the relevant technology, or the network device may also allocate a dedicated scheduling request resource for reporting the beam measurement result. Thus, the terminal device may send the scheduling request to the network device with the scheduling request resource, to indicate the network device to configure the reporting resource.

In an embodiment of the present disclosure, the terminal device reports the beam measurement result of the specific candidate cell to the network device. When there are a plurality of specific candidate cells, the terminal device may also report cell identities of the plurality of specific candidate cells to the network device to distinguish different candidate cells.

By implementing the embodiments of the present disclosure, the network device receives the beam measurement result of the specific candidate cell reported by the terminal device, in which the specific candidate cell is determined by the terminal device from the candidate cells. Thus, on the basis that the network device may obtain the network state timely and make a switching decision timely according to the network state, the power consumption of the terminal device may be saved, and the resource overhead caused by the frequent reporting of beam measurement results may also be reduced.

Referring to FIG. 15, FIG. 15 is a flowchart of another method for reporting the beam measurement result according to an embodiment of the present disclosure.

As shown in FIG. 15, the method is executed by a network device, and the method may include but is not limited to the following steps.

S151: indication information is sent to the terminal device, in which the indication information is used to indicate a specific candidate cell that meets a specific condition.

In an embodiment of the present disclosure, the network device sends the indication information to the terminal device after the terminal device obtains the beam measurement result of the candidate cell, or before the terminal device obtains the beam measurement result of the candidate cell, or during the process that the terminal device obtains the beam measurement result of the candidate cell. The embodiments of the present disclosure do not limit this.

In an embodiment of the present disclosure, the terminal device receives indication information from the network device, and the indication information is used to indicate the specific candidate cell. Based on this, the terminal device may determine the specific candidate cell according to the indication information.

The indication information may be MAC CE information, and the MAC CE information is used to indicate activation of the specific candidate cell, or deactivation of the specific candidate cell, or to indicate a measurement resource of the specific candidate cell associated with the reporting configuration.

In an exemplary embodiment, the indication information of the network device may be that the network device sends MAC CE information to the terminal device, and dynamically activates or deactivates or selects the specific candidate cell that needs to perform beam measurement and report the beam measurement result via the MAC CE information.

Exemplarily, as shown in FIG. 4, the specific candidate cell that needs to perform measurement and reporting is dynamically activated/deactivated/selected via MAC CE information. Sᵢ corresponds to each candidate cell, the corresponding relationship may be pre-configured or by default, such as corresponding with the size of the candidate cell ID. Sᵢ=0 means the measurement is not needed, and the candidate cell does not need to perform measurement, otherwise it means that measurement is needed.

In another exemplary embodiment, the indication information of the network device may be an MAC CE sent by the network device to the terminal device, in which the MAC CE indicates the association relationship between the reporting configuration and the measurement resource, for example the MAC CE configures the reference signal resource set of the specific candidate cell associated with the reporting configuration, so as to indicate the terminal device to determine the specific candidate cell, to report the beam measurement result of the specific candidate cell according to the reporting configuration.

It may be understood that in the beam measurement in the related technology, the association relationship between the reporting configuration (CSI-ReportConfig) and the measurement resource (CSI-Resource) is that the CSI-ReportConfig will include one CSI-Resource ID for associating the reference signal for the measurement and reporting. This association relationship is configured via an RRC signaling and cannot be changed. Moreover, one CSI-ReportConfig may only include one CSI-Resource ID.

In an embodiment of the present disclosure, the association relationship between the reporting configuration (CSI-ReportConfig) and the measurement resource (CSI-Resource) is dynamically configured, which allows one reporting configuration to be associated with a plurality of reference signals for the measurement and reporting, in which the associated plurality of reference signals for the measurement and reporting may be reference signals of one or more candidate cells, or may also be reference signals of a serving cell and a candidate cell, etc. For example, one CSI-ReportConfig may be allowed to correspond to a plurality of CSI-Resource IDs.

For example, as shown in FIG. 5, the association relationship between the reporting configuration and the measurement reference signal is changed dynamically, and one reporting configuration is allowed to be associated with one or more reference signal resource sets. These reference signal resource sets may be reference signals of different cells. In this way, the specific candidate cell that needs the measurement and reporting may be changed dynamically.

Alternatively, as shown in FIG. 6, the association relationship between the reporting configuration and the measurement reference signal may be changed dynamically, and one reporting configuration may be allowed to be associated with a plurality of reference signal resource sets. These reference signal resource sets may be reference signals of different cells. In this way, the specific candidate cell that needs the measurement and reporting may be changed dynamically.

In a case that the indication information MAC CE information is used to indicate activation of a certain specific candidate cell, the terminal device may determine that the specific candidate cell is an activated candidate cell.

In a case that the indication information MAC CE information is used to indicate that the reporting configuration is associated with the measurement resource of a certain candidate cell, the terminal device may determine that the specific candidate cell is a candidate cell whose measurement resource is associated with the reporting configuration.

Based on this, the terminal device receives the indication information from the network device and determines the specific candidate cell according to the indication information.

S152: the beam measurement result of the specific candidate cell reported by the terminal device is received, in which the specific candidate cell is determined by the terminal device from candidate cells.

In an embodiment of the present disclosure, the relevant description of S152 may refer to the relevant description in the above embodiment, and the same content will not be repeated here.

In an embodiment of the present disclosure, the terminal device reports the beam measurement result of the specific candidate cell to the network device. In a case that there are a plurality of specific candidate cells, the terminal device may also report cell identities of the plurality of specific candidate cells to the network device to distinguish different candidate cells.

By implementing the embodiments of the present disclosure, the terminal device obtains the beam measurement result of the candidate cell, receives the indication information of the network device, in which the indication information is used to indicate the specific candidate cell, determines the specific candidate cell according to the indication information, and reports the beam measurement result of the specific candidate cell to the network device. Thus, on the basis that the network device may obtain the network state timely and make a switching decision timely according to the network state, the power consumption of the terminal device may be saved, and the resource overhead caused by the frequent reporting of the beam measurement results may also be reduced.

Referring to FIG. 16, FIG. 16 is a flowchart of another method for reporting the beam measurement result according to an embodiment of the present disclosure.

As shown in FIG16, the method is executed by a network device, and the method may include but is not limited to the following steps.

S161: a scheduling request sent by the terminal device is received, in which the scheduling request is used to indicate the network device to schedule a reporting resource for the terminal device, and the terminal device reports the beam measurement result of the specific candidate cell to the network device by the reporting resources.

In an embodiment of the present disclosure, the terminal device sends a scheduling request to the network device after obtaining the beam measurement results of the candidate cells and determining the specific candidate cell, or before obtaining the beam measurement results of the candidate cells and determining the specific candidate cell, or during the process of obtaining the beam measurement results of the candidate cells and determining the specific candidate cell. The embodiments of the present disclosure do not limit this.

The terminal device sends a scheduling request to the network device, to request the network device to schedule the reporting resource for the terminal device, so as to report the beam measurement result of the specific candidate cell to the network device by the reporting resource.

In an embodiment of the present disclosure, the terminal device sends the scheduling request to the network device, and the scheduling request may be sent with the scheduling request resource for sending the scheduling request in the related technology. Alternatively, the network device may allocate a dedicated scheduling request resource for sending the scheduling request, and send the allocated scheduling request resource to the terminal device, and the terminal device may use the dedicated scheduling request resource to send the scheduling request.

S162: a report configuration is sent to the terminal device.

In an embodiment of the present disclosure, after receiving the scheduling request sent by the terminal device, the network device may send the reporting configuration to the terminal device to schedule the reporting resource for the terminal device.

S163: the beam measurement result of the specific candidate cell reported by the terminal device according to the reporting configuration is received, in which the specific candidate cell is determined by the terminal device from the candidate cells.

In the embodiments of the present disclosure, the method for the terminal device to determine the specific candidate cell from the candidate cells may refer to the relevant description in the above embodiments, which will not be repeated here.

In an embodiment of the present disclosure, the terminal device sends a scheduling request to the network device, to request the network device to schedule the reporting resource for the terminal device. After receiving the scheduling request sent by the terminal device, the network device may send the reporting configuration to the terminal device. The reporting configuration may indicate the reporting resource, so that the terminal device may report the beam measurement result of the specific candidate cell to the network device by the reporting resource according to the reporting configuration.

For the relevant description of S163, reference may be made to the relevant description in the above embodiments, and the same contents will not be repeated here.

By implementing the embodiments of the present disclosure, the network device receives the scheduling request sent by the terminal device, in which the scheduling request is used to indicate the network device to schedule the reporting resource for the terminal device, the terminal device reports the beam measurement result of the specific candidate cell to the network device by the reporting resource, sends the reporting configuration to the terminal device, and receives the beam measurement result of the specific candidate cell reported by the terminal device according to the reporting configuration, in which the specific candidate cell is determined by the terminal device from the candidate cells. Thus, on the basis that the network device may obtain the network state timely and make a switching decision timely according to the network state, the power consumption of the terminal device may be saved, and the resource overhead caused by the frequent reporting of beam measurement results may also be reduced.

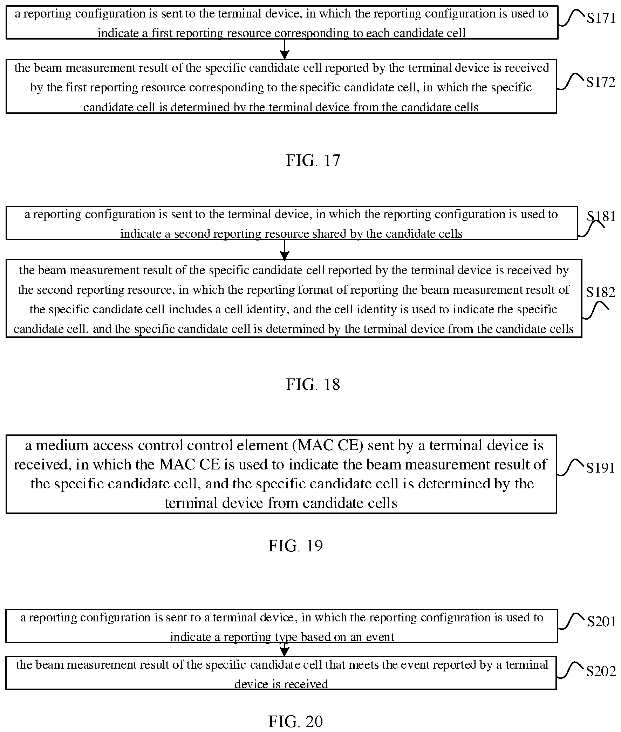

Referring to FIG. 17, FIG. 17 is a flowchart of another method for reporting the beam measurement result according to an embodiment of the present disclosure.

As shown in FIG. 17, the method is executed by a network device, and the method may include but is not limited to the following steps.

S171: a reporting configuration is sent to the terminal device, in which the reporting configuration is used to indicate a first reporting resource corresponding to each candidate cell.

S172: the beam measurement result of the specific candidate cell reported by the terminal device is received by the first reporting resource corresponding to the specific candidate cell, in which the specific candidate cell is determined by the terminal device from the candidate cells.

The method for the terminal device to determine the specific candidate cell from the candidate cells may be found in the relevant description in the above embodiments, and will not be repeated here.

In an embodiment of the present disclosure, the terminal device obtains the beam measurement results of the candidate cells, determines the specific candidate cells, and in a case that the reporting configuration sent by the network device is revived, reports the beam measurement result of the specific candidate cell according to the reporting configuration.

The reporting configuration is used to indicate the first reporting resource corresponding to each candidate cell, so that the terminal device reports the beam measurement result of the specific candidate cell to the network device by the first reporting resource corresponding to the specific cell, and the network device may determine the specific candidate cell based on the first reporting resource, and determine that the beam measurement result reported by the terminal device is the beam measurement result of the specific candidate cell.

By implementing an embodiment of the present disclosure, the network device sends a reporting configuration to the terminal device, the reporting configuration is used to indicate the first reporting resource corresponding to each candidate cell, and receives the beam measurement result of the specific candidate cell reported by the terminal device by the first reporting resource corresponding to the specific candidate cell, in which the specific candidate cell is determined by the terminal device from the candidate cells. Thus, on the basis that the network device may obtain the network state timely and make a switching decision timely according to the network state, the power consumption of the terminal device may be saved, and the resource overhead caused by the frequent reporting of the beam measurement results may also be reduced.

Referring to FIG. 18, FIG. 18 is a flowchart of another method for reporting the beam measurement result according to an embodiment of the present disclosure.

As shown in FIG. 18, the method is executed by a network device, and the method may include but is not limited to the following steps.

S181: a reporting configuration is sent to the terminal device, in which the reporting configuration is used to indicate a second reporting resource shared by the candidate cells.

S182: the beam measurement result of the specific candidate cell reported by the terminal device is received by the second reporting resource, in which the reporting format of reporting the beam measurement result of the specific candidate cell includes a cell identity, and the cell identity is used to indicate the specific candidate cell, and the specific candidate cell is determined by the terminal device from the candidate cells.

The method for the terminal device to determine the specific candidate cell from the candidate cells may be found in the relevant description in the above embodiments, and will not be repeated here.

In an embodiment of the present disclosure, the terminal device obtains the beam measurement results of the candidate cells, determines the specific candidate cell, and in a case that the reporting configuration sent by the network device is received, reports the beam measurement result of the specific candidate cell according to the reporting configuration.

The reporting configuration is used to indicate the second reporting resource shared by the candidate cells, and the terminal device may report the beam measurement result of the specific candidate cell with the shared second reporting resource. In this case, the terminal device may include the cell identity in the reporting format of reporting the beam measurement result of the specific candidate cell, and the cell identity is used to indicate the specific candidate cell. Based on this, the network device may determine that the beam measurement result reported by the terminal device is the beam measurement result of the specific candidate cell according to the cell identity.

In an embodiment of the present disclosure, the terminal device determines the specific candidate cell, and reports the beam measurement result of the specific candidate cell to the network device by the second reporting resource. In a case that the specific candidate cell is not determined, the second reporting resource is idle. In order to avoid wasting resources, the second reporting resource may also be multiplexed for other uplink transmissions, but the priority is lower than the reporting of the beam measurement result.

In a case that the second reporting resource is multiplexed for other uplink transmissions, the terminal device may further include an identifier in the reporting format of reporting the beam measurement result of the specific candidate cell, and the identifier is used to indicate that the reported beam measurement result is the beam measurement result of the specific candidate cell, so that the network device may determine whether the beam measurement result of the specific candidate cell is transmitted by the second reporting resource or other uplink transmissions is transmitted by the second reporting resource.

In an embodiment of the present disclosure, in order to inform the network device whether the beam measurement result of the specific candidate cell is transmitted by the second reporting resource or other uplink transmissions is transmitted by the second reporting resource, an identifier is introduced at the front end. When the identifier is a specific value, it indicates that the beam measurement result is transmitted with the resource.

By implementing an embodiment of the present disclosure, the network device sends a reporting configuration to the terminal device, and the reporting configuration is used to indicate a second reporting resource shared by the candidate cells. The beam measurement result of the specific candidate cell reported by the terminal device is received by the second reporting resource, in which the reporting format of reporting the beam measurement result of the specific candidate cell includes a cell identity, and the cell identity is used to indicate the specific candidate cell, and the specific candidate cell is determined by the terminal device from the candidate cells. Thus, on the basis that the network device may obtain the network state timely and make a switching decision timely according to the network state, the power consumption of the terminal device may be saved, and the resource overhead caused by the frequent reporting of the beam measurement results may also be reduced.

Referring to FIG .19, FIG. 19 is a flowchart of another method for reporting the beam measurement result according to an embodiment of the present disclosure.

As shown in FIG. 19, the method is performed by a network device, and the method may include but is not limited to the following step.

S191: an MAC CE sent by a terminal device is received, in which the MAC CE is used to indicate the beam measurement result of the specific candidate cell, and the specific candidate cell is determined by the terminal device from candidate cells.

In the embodiments of the present disclosure, the method for the terminal device to determine the specific candidate cell from the candidate cells may refer to the relevant description in the above embodiments, which will not be repeated here.

In an embodiment of the present disclosure, after obtaining the beam measurement results of the candidate cells and determining the specific candidate cell, the beam measurement result of the specific candidate cell may be reported to the network device, and the medium access control control element (MAC CE) may be sent to the network device, in which the MAC CE is used to indicate the beam measurement result of the specific candidate cell.

It is noted that the network device may not configure the reporting resource for the terminal device, and the terminal device may report with the most recent PUSCH after obtaining the beam measurement result or other PUSCH. In order to enable the network device to identify the resource, a new MAC CE is defined for reporting the beam measurement result.

A possible MAC CE format is shown in FIG. 7. Cᵢ is used to indicate whether the beam measurement result of a certain candidate cell (neighboring cell) exists. N indicates the number of the candidate cells whose beam measurement results are reported. CRI is CSI-RS resource indicator (CRI), SSBRI is SSB resource indicator (SSBRI). L1-RSRP is the layer-1 reference signal received power, also known as the received power of the reference signal, and L1-SINR is layer-1 signal to interference plus noise ratio, also known as a signal to interference plus noise ratio.

By implementing the embodiments of the present disclosure, the network device receives the MAC CE sent by the terminal device, in which the MAC CE is used to indicate the beam measurement result of the specific candidate cell, in which the specific candidate cell is determined by the terminal device from the candidate cells. Thus, on the basis that the network device may obtain the network state timely and make a switching decision timely according to the network state, the power consumption of the terminal device may be saved, and the resource overhead caused by the frequent reporting of the beam measurement results may also be reduced.

Referring to FIG. 20, FIG. 20 is a flowchart of another method for reporting the beam measurement result according to an embodiment of the present disclosure.

As shown in FIG. 20, the method is executed by a network device, and the method may include but is not limited to the following steps.

S201: a reporting configuration is sent to a terminal device, in which the reporting configuration is used to indicate a reporting type based on an event.

S202: the beam measurement result of the specific candidate cell that meets the event reported by a terminal device is received.

In an embodiment of the present disclosure, the terminal device receives the reporting configuration sent by the network device, in which the reporting configuration is used to indicate the reporting type based on the event.

The network device sends the reporting configuration to the terminal device, and the reporting configuration is used to indicate the reporting type based on the event.

The terminal device determines the specific candidate cell and may determine that the candidate cell that satisfies the event is the specific candidate cell.

In an embodiment of the present disclosure, the event includes at least one of:
Event1, in which Event1 is a measurement result of a best beam of the candidate cells>a measurement result of a best beam of serving cells + a first offset value offset1;
Event2, in which Event2 is an average value of beam measurement results of the candidate cells > an average value of beam measurement results of the serving cells + a second offset value offset2;
Event3, in which Event3 is an average value or a maximum value of the beam measurement results of the candidate cells > a threshold; or
Event4, in which Event4 is that first N best measurement results are the beam measurement results of the candidate cells, and N is a positive integer

In an embodiment of the present disclosure, in a case that the terminal device determines that a certain candidate cell satisfies Event 1, the terminal device determines that the candidate cell is the specific candidate cell, and reports the beam measurement result of the specific candidate cell to the network device. That is, in the case that it is determined that the measurement result of the best beam of the candidate cells > the measurement result of the best beam of the serving cells + the first offset value offset1, the candidate cell is determined to be the specific candidate cell, and the beam measurement result of the specific candidate cell is reported to the network device.

In an embodiment of the present disclosure, in a case that the terminal device determines that a certain candidate cell satisfies Event2, the terminal device determines that the candidate cell is the specific candidate cell, and reports the beam measurement result of the specific candidate cell to the network device. That is, in a case that it is determined that the average value of the beam measurement results of the candidate cells > the average value of the beam measurement results of the serving cells + the second offset value offset2, the candidate cell is determined to be the specific candidate cell, and the beam measurement result of the specific candidate cell is reported to the network device.

In an embodiment of the present disclosure, in a case that the terminal device determines that a certain candidate cell satisfies Event 3, the terminal device determines that the candidate cell is the specific candidate cell, and reports the beam measurement result of the specific candidate cell to the network device. That is, in a case that it is determined that the average value or the maximum value of the beam measurement results of the candidate cells is greater than a threshold, the candidate cell is determined to be the specific candidate cell, and the beam measurement result of the specific candidate cell is reported to the network device.

In an embodiment of the present disclosure, in the case that the terminal device determines that a certain candidate cell satisfies Event 4, the terminal device determines that the candidate cell is the specific candidate cell, and reports the beam measurement result of the specific candidate cell to the network device. That is, in the case that first N best measurement results are the measurement results of the candidate cells, and N is a positive integer, the candidate cell is determined to be the specific candidate cell, and the beam measurement result of the specific candidate cell is reported to the network device.

It should be noted that the above embodiments are not exhaustive but are only illustrations of some embodiments, and the above embodiments may be implemented individually or in combination. The above embodiments are only for illustration and are not intended to be specific limitations on the protection scope of the embodiments of the present disclosure.

In an embodiment of the present disclosure, in the reporting configuration, the reporting type may also include periodic, semi-static, and non-periodic reporting. The reporting type based on the event is included. For example, when the reporting type (reportType) in the reporting configuration (CSI-ReportConfig) is configured as eventTriggerd, it indicates that the reporting method is the reporting type based on the event.

Identities may be given for different events. When eventTriggerd in reportType is given as eventID=0, it means that the beam measurement result will be reported only when the measurement result of the candidate cell meets Event1.

By implementing an embodiment of the present disclosure, the network device sends the reporting configuration to the terminal device, the reporting configuration is used to indicate the reporting type based on the event, and receives the beam measurement result of the specific candidate cell reported by the terminal device when the event is satisfied, in which the specific candidate cell is determined by the terminal device from the candidate cells. Thus, on the basis that the network device may obtain the network state timely and make a switching decision timely according to the network state, the power consumption of the terminal device may be saved, and the resource overhead caused by the frequent reporting of the beam measurement results may also be reduced.

In the above embodiments according to the present disclosure, the methods according to the embodiments of the present disclosure are introduced from the perspectives of the terminal device and the network device. In order to implement the functions in the methods according to the above embodiments of the present disclosure, the network device and the terminal device may include a hardware structure and a software module, and implement the above functions in the form of a hardware structure, a software module, or a hardware structure plus a software module. One of the above functions may be executed in the form of a hardware structure, a software module, or a hardware structure plus a software module.

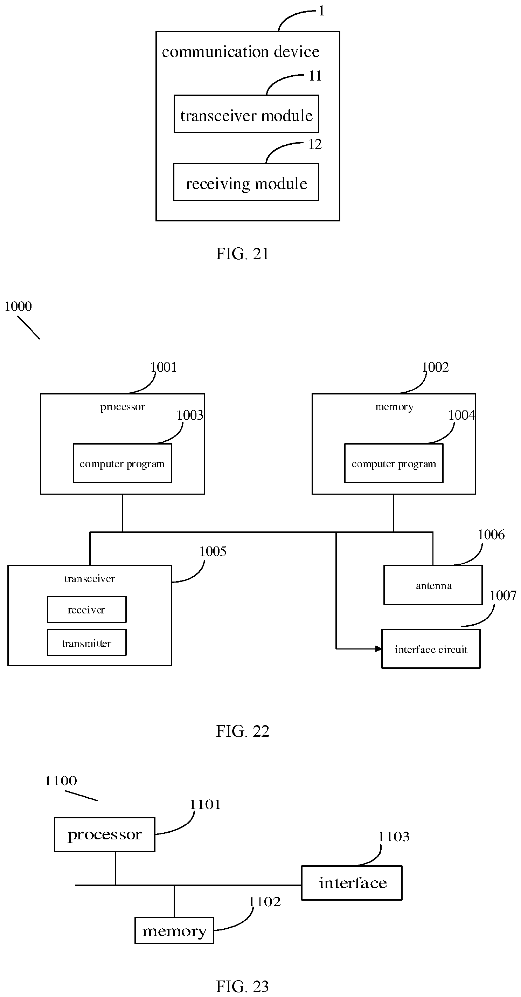

Referring to FIG. 21, FIG. 21 is a schematic diagram of the structure of a communication device 1 according to an embodiment of the present disclosure. The communication device 1 shown in FIG. 21 may include a transceiver module 11 and a processing module 12. The transceiver module may include a sending module and/or a receiving module, the sending module is used to implement the sending function, the receiving module is used to implement the receiving function, and the transceiver module may implement the sending function and/or the receiving function.

The communication device 1 may be a terminal device, or a device in the terminal device, or a device that may be used in conjunction with the terminal device. Alternatively, the communication device 1 may be a network device, or a device in a network device, or a device that may be used in conjunction with a network device.

The communication device 1 is the terminal device.

The device includes a transceiver module 11 and a processing module 12.

The transceiver module 11 is configured to report the beam measurement result of the specific candidate cell to the network device, in which the specific candidate cell is determined by the terminal device from the candidate cells.

In some embodiments, the transceiver module 11 is further configured to receive a reporting configuration sent by the network device.

In some embodiments, the reporting configuration is used to indicate a first reporting resource corresponding to each candidate cell, and the transceiver module 11 is further configured to report the beam measurement result of the specific candidate cell to the network device by the first reporting resource corresponding to the specific candidate cell.

In some embodiments, the reporting configuration is used to indicate a second reporting resource shared by the candidate cells, and the transceiver module 11 is also configured to report the beam measurement results of the specific candidate cell to the network device by the second reporting resource, in which the reporting format of reporting the beam measurement result of the specific candidate cell includes a cell identity, and the cell identity is used to indicate the specific candidate cell.

In some embodiments, the reporting format further includes an identifier, and the identifier is used to indicate that the reported beam measurement result is the beam measurement result of the specific candidate cell.

In some embodiments, the transceiver module 11 is further configured to send a medium access control layer control element (MAC CE) to the network device, in which the MAC CE is used to indicate the beam measurement result of the specific candidate cell.

In some embodiments, the transceiver module 11 is also configured to send a scheduling request to the network device, in which the scheduling request is used to indicate the network device to schedule a reporting resource for the terminal device, and the terminal device reports the beam measurement results of the specific candidate cell to the network device by the reporting resources.

In some embodiments, the reporting configuration is used to indicate a reporting type based on an event, and the transceiver module 11 is further configured to report the beam measurement result of the specific candidate cell that meets the event to the network device.

In some embodiments, the event includes at least one of:
Event1, in which Event1 is a measurement result of a best beam of the candidate cells>a measurement result of a best beam of serving cells + a first offset value offset1;
Event2, in which Event2 is an average value of beam measurement results of the candidate cells > an average value of beam measurement results of the serving cells + a second offset value offset2;
Event3, in which Event3 is an average value or a maximum value of the beam measurement results of the candidate cells > a threshold; or
Event4, in which Event4 is that first N best measurement results are the beam measurement results of the candidate cells, and N is a positive integer.

In some embodiments, the transceiver module 11 is further configured to receive indication information from the network device, in which the indication information is used to indicate the specific candidate cell.

In some embodiments, the processing module 12 is further configured to determine the specific candidate cell according to the indication information.

In some embodiments, the indication information is MAC CE information, and the MAC CE information is used to activate the specific candidate cell, or deactivate the specific candidate cell, or indicate a measurement resource of the specific candidate cell associated with the reporting configuration.

In some embodiments, the transceiver module 11 is further configured to report cell identities of a plurality of specific candidate cell to the network device in response to the plurality of the specific candidate cells.

The communication device 1 is a network device.

The device includes a transceiver module 11.

The transceiver module 1 1 is configured to receive the beam measurement result of the specific candidate cell reported by the terminal device, in which the specific candidate cell is determined by the terminal device from candidate cells.

In some embodiments, the transceiver module 11 is further configured to send a reporting configuration to the terminal device.

In some embodiments, the reporting configuration is used to indicate a first reporting resource corresponding to each candidate cell, and the transceiver module 11 is further configured to receive the beam measurement result of the specific candidate cell reported by the terminal device by the first reporting resource corresponding to the specific candidate cell.

In some embodiments, the reporting configuration is used to indicate a second reporting resource shared by the candidate cells, and the transceiver module 11 is also configured to receive the beam measurement results of the specific candidate cell reported by the terminal device by the second reporting resource, in which the reporting format of reporting the beam measurement result of the specific candidate cell includes a cell identity, and the cell identity is used to indicate the specific candidate cell.

In some embodiments, the reporting format further includes an identifier, and the identifier is used to indicate that the reported beam measurement result is the beam measurement result of the specific candidate cell, or uplink transmissions other than the beam measurement result of the specific candidate cell.

In some embodiments, the transceiver module 11 is further configured to receive an MAC CE sent by the terminal device, in which the MAC CE is used to indicate the beam measurement result of the specific candidate cell.

In some embodiments, the transceiver module 11 is further configured to receive a scheduling request sent by the terminal device, in which the scheduling request is used to indicate the network device to schedule a reporting resource for the terminal device, and the terminal device reports the beam measurement result of the specific candidate cell to the network device by the reporting resource.

In some embodiments, the reporting configuration is used to indicate a reporting type based on an event, and the transceiver module 11 is further configured to receive the beam measurement result of the specific candidate cell that meets the event reported by the terminal device.

In some embodiments, the event includes at least one of:
Event1, in which Event1 is a measurement result of a best beam of the candidate cells>a measurement result of a best beam of serving cells + a first offset value offset1;
Event2, in which Event2 is an average value of beam measurement results of the candidate cells > an average value of beam measurement results of the serving cells + a second offset value offset2;
Event3, in which Event3 is an average value or a maximum value of the beam measurement results of the candidate cells > a threshold; or
Event4, in which Event4 is that first N best measurement results are the beam measurement results of the candidate cells, and N is a positive integer.

In some embodiments, the transceiver module 11 is further configured to send indication information to the terminal device, in which the indication information is used to indicate the specific candidate cell.

In some embodiments, the indication information is MAC CE information, and the MAC CE information is used to indicate activation of the specific candidate cell, or deactivation of the specific candidate cell, or to indicate a measurement resource of the specific candidate cell associated with the reporting configuration.

In some embodiments, the transceiver module 11 is further configured to receive cell identities of a plurality of specific candidate cells reported by the terminal device, in which the cell identities of the plurality of specific candidate cells are reported by the terminal device in a case that there are the plurality of specific candidate cells.

Regarding the communication device 1 in the above embodiments, the specific mode in which each module performs operations has been described in detail in the embodiments of the method, and will not be elaborated here.

The communication device 1 according to the above embodiments of the present disclosure achieves the same or similar beneficial effects as the method for reporting the beam measurement result according to some of the above embodiments, which will not be described in detail here.

Referring to FIG. 22, FIG. 22 is a schematic diagram of the structure of another communication device 1000 according to an embodiment of the present disclosure. The communication device 1000 may be a network device, or a terminal device, or a chip, a chip system, or a processor that supports the network device to implement the above method, or a chip, a chip system, or a processor that supports the terminal device to implement the above method. The communication device 1000 may be used to implement the method described in the above method embodiments, and for details reference is made to the description in the above method embodiments.

The communication device 1000 may include one or more processors 1001. The processor 1001 may be a general-purpose processor or a dedicated processor, etc. For example, it may be a baseband processor or a central processing unit. The baseband processor may be used to process the communication protocol and communication data, and the central processing unit may be used to control the communication device (such as a network device, a baseband chip, a terminal device, a terminal device chip, a DU or a CU, etc.), execute a computer program, and process the data of the computer program.

Optionally, the communication device 1000 may further include one or more memories 1002, on which a computer program 1004 may be stored, and the memory 1002 executes the computer program 1004 so that the communication device 1000 executes the method described in the above method embodiments. Optionally, data may also be stored in the memory 1002. The communication device 1000 and the memory 1002 may be provided separately or integrated together.

Optionally, the communication device 1000 may further include a transceiver 1005 and an antenna 1006. The transceiver 1005 may be referred to as a transceiver unit, a transceiver, or a transceiver circuit, etc., for implementing a transmitting and receiving function. The transceiver 1005 may include a receiver and a transmitter, the receiver may be referred to as a receiving machine or a receiving circuit, etc., for implementing a receiving function; the transmitter may be referred to as a transmitting machine or a transmitting circuit, etc., for implementing a transmitting function.

Optionally, the communication device 1000 may further include one or more interface circuits 1007. The interface circuit 1007 is used to receive code instructions and transmit the code instructions to the processor 1001. The processor 1001 executes the code instructions to enable the communication device 1000 to execute the method described in the above method embodiments.

The communication device 1000 is a terminal device: the transceiver 1005 is used to execute S21 in FIG. 2; S81 and S83 in FIG. 8; S91, S92 and S93 in FIG. 9; S101 and S102 in FIG. 10; S111 and S112 in FIG. 11; S121 in FIG. 12; S131 and S132 in FIG. 13; the processor 1001 is used to execute S82 in FIG. 8.

The communication device 1000 is a network device: the transceiver 1005 is used to execute S141 in FIG. 14; S151 and S152 in FIG. 15; S161, S162 and S163 in FIG. 16; S171 and S172 in FIG. 17; S181 and S182 in FIG. 18; S191 in FIG. 19; and S201 and S202 in FIG. 20.

In one implementation, the processor 1001 may include a transceiver for implementing receiving and sending functions. For example, the transceiver may be a transceiver circuit, an interface, or an interface circuit. The transceiver circuit, interface, or interface circuit for implementing the receiving and sending functions may be separate or integrated. The above-mentioned transceiver circuit, interface, or interface circuit may be used for reading and writing code/data, or the above-mentioned transceiver circuit, interface, or interface circuit may be used for transmitting or delivering signals.

In one implementation, the processor 1001 may store a computer program 1003, the computer program is executed by the processor 1001 and enables the communication device 1000 to perform the method described in the above method embodiments. The computer program 1003 may be fixed in the processor 1001, in which case the processor 1001 may be implemented by a hardware.

In one implementation, the communication device 1000 may include a circuit that may implement the functions of sending, receiving or communicating in the above-mentioned method embodiments. The processor and transceiver described in the present disclosure may be implemented in an integrated circuit (IC), an analog IC, a radio frequency integrated circuit (RFIC), a mixed signal IC, an application specific integrated circuit (ASIC), a printed circuit board (PCB), an electronic device, etc. The processor and transceiver may also be manufactured using various IC process technologies, such as complementary metal oxide semiconductor (CMOS), N-type metal oxide semiconductor (nMetal-oxide-semiconductor, NMOS), P-type metal oxide semiconductor (positive channel metal oxide semiconductor, PMOS), bipolar junction transistor (BJT), bipolar CMOS (BiCMOS), silicon germanium (SiGe), gallium arsenide (GaAs), etc.

The communication device described in the above embodiments may be a terminal device, but the scope of the communication device described in the present disclosure is not limited thereto, and the structure of the communication device may not be limited by FIG. 22. The communication device may be an independent device or may be part of a larger device. For example, the communication device may be:
(1) an independent integrated circuit IC, a chip, a chip system or a subsystem;
(2) a collection of one or more ICs, optionally including a storage component for storing data or computer programs;
(3) ASIC, such as a modem;
(4) modules that may be embedded in other devices;
(5) receivers, terminal devices, intelligent terminal devices, cellular phones, wireless devices, handheld devices, mobile units, vehicle-mounted devices, network devices, cloud devices, artificial intelligence devices, etc.;
(6) others.

In a case that the communication device may be a chip or a chip system, FIG. 23 is referred to, which is a structural diagram of a chip according to an embodiment of the present disclosure.

The chip 1100 includes a processor 1101 and an interface 1103. The number of the processor 1101 may be one or more, and the number of the interface 1103 may be multiple.

In the case that the chip is used to implement the functions of the network device in an embodiment of the present disclosure,
the interface 1103 is used to receive code instructions and transmit the code instructions to the processor, and
the processor 1101 executes the code instructions to implement the method for reporting the beam measurement result as described in some of the above embodiments.

In the case that the chip is used to implement the functions of the terminal device in an embodiment of the present disclosure,
the interface 1103 is used to receive code instructions and transmit the code instructions to the processor, and
the processor 1101 is used to execute the code instructions to implement the method for reporting the beam measurement result as described in some of the above embodiments.

Optionally, the chip 1100 further includes a memory 1102, and the memory 1102 is used to store necessary computer programs and data.

Those skilled in the art may also understand that the various illustrative logical blocks and steps listed in the embodiments of the present disclosure may be implemented by electronic hardware, computer software, or a combination of the two. Whether such functions are implemented by hardware or software depends on the specific application and the design requirements of the entire system. Those skilled in the art may use various methods to implement the functions described for each specific application, but such implementation should not be understood as exceeding the protection scope of the embodiments of the present disclosure.

An embodiment of the present disclosures also provide a system for reporting the beam measurement result, the system includes the communication device as a terminal device and the communication device as a network device in the aforementioned embodiment of FIG. 20, or the system includes the communication device as a terminal device and the communication device as a network device in the aforementioned embodiment of FIG. 21.

The present disclosure also provides a readable storage medium having instructions stored thereon, the instructions are executed by the computer to implement the functions of any of the above method embodiments.

The present disclosure also provides a computer program product, the computer program product is executed by the computer to implement the functions of any of the above method embodiments.

In the above embodiments, it may be implemented in whole or in part by software, hardware, firmware or any combination thereof. When implemented by software, it may be implemented in whole or in part in the form of a computer program product. The computer program product includes one or more computer programs. When the computer program is loaded and executed on a computer, the process or function described in the embodiments of the present disclosure is generated in whole or in part. The computer may be a general-purpose computer, a special-purpose computer, a computer network, or other programmable device. The computer program may be stored in a computer readable storage medium, or transmitted from one computer readable storage medium to another computer readable storage medium. For example, the computer program may be transmitted from one website site, computer, server or data center by wired (e.g., coaxial cable, optical fiber, digital subscriber line (DSL)) or wireless (e.g., infrared, wireless, microwave, etc.) mode to another website site, computer, server or data center. The computer readable storage medium may be any available medium that may be accessed by a computer or a data storage device such as a server or data center that includes one or more available medium integrated. The available medium may be a magnetic medium (e.g., a floppy disk, a hard disk, a magnetic tape), an optical medium (e.g., a digital video disc (DVD)), or a semiconductor medium (e.g., a solid state disk (SSD)).

Those skilled in the art may understand that the various numerical numbers such as first and second involved in the present disclosure are only for the convenience of description and are not used to limit the scope of the embodiments of the present disclosure, and also indicate the order of precedence.

At least one in the present disclosure may also be described as one or more, and a plurality may be two, three, four or more, which is not limited in the present disclosure. In the embodiments of the present disclosure, the technical features are distinguished by "first", "second", "third", "A", "B", "C" and "D", etc., and there is no order of precedence or size between the technical features described by the "first", "second", "third", "A", "B", "C" and "D".

The corresponding relationships shown in the tables in the present disclosure may be configured or predefined. The values of the information in each table are only examples and may be configured as other values, which are not limited by the present disclosure. When configuring the corresponding relationship between the information and each parameter, it is not necessarily required to configure all the corresponding relationships illustrated in each table. For example, in the table in the present disclosure, the corresponding relationships shown in some rows may not be configured. For another example, appropriate adjustments may be made based on the above table, such as splitting, merging, etc. The names of the parameters shown in the titles of the above tables may also use other names that may be understood by the communication device, and the values or representations of the parameters may also be other values or representations that may be understood by the communication device. When implementing the above tables, other data structures may also be used, such as arrays, queues, containers, stacks, linear lists, pointers, linked lists, trees, graphs, structures, classes, heaps, hash tables or hash tables.

The predefined in the present disclosure may be understood as defined, predefined, stored, pre-stored, pre-negotiated, pre-configured, solidified, or pre-burned.

Those of ordinary skill in the art will appreciate that the units and algorithm steps of each example described in conjunction with the embodiments of the present disclosure may be implemented in electronic hardware, or a combination of computer software and electronic hardware. Whether these functions are performed in hardware or software depends on the specific application and design constraints of the technical solution. Professional and technical personnel may use different methods to implement the described functions for each specific application, but such implementation should not be considered to be beyond the scope of the present disclosure.

Those skilled in the art may clearly understand that, for the convenience and brevity of description, the specific working processes of the systems, devices and units described above may refer to the corresponding processes in the aforementioned method embodiments and will not be repeated here.

The above is only a specific embodiment of the present disclosure, but the protection scope of the present disclosure is not limited thereto. Any person skilled in the art who is familiar with the technical field may easily think of changes or substitutions within the technical scope defined in the present disclosure, which should be included in the protection scope of the present disclosure. Therefore, the protection scope of the present disclosure should be based on the protection scope of the claims.

## Claims

1. A method for reporting a beam measurement result, performed by a terminal device, comprising:
reporting the beam measurement result of a specific candidate cell to a network device, wherein the specific candidate cell is determined by the terminal device from candidate cells.

2. The method according to claim 1, further comprising:
receiving a reporting configuration sent by the network device.

3. The method according to claim 2, wherein the reporting configuration is used to indicate first reporting resources corresponding to the candidate cells respectively, and reporting the beam measurement result of the specific candidate cell to the network device comprises:
reporting the beam measurement result of the specific candidate cell to the network device by a first reporting resource corresponding to the specific candidate cell.

4. The method according to claim 2, wherein the reporting configuration is used to indicate a second reporting resource shared by the candidate cells, and reporting the beam measurement result of the specific candidate cell to the network device comprises:
reporting the beam measurement result of the specific candidate cell to the network device by the second reporting resource, wherein a reporting format of reporting the beam measurement result of the specific candidate cell comprises a cell identity, and the cell identity is used to indicate the specific candidate cell.

5. The method according to claim 4, wherein the reporting format further comprises an identifier, and the identifier is used to indicate that the reported beam measurement result is the beam measurement result of the specific candidate cell.

6. The method according to claim 1, wherein reporting the beam measurement result of the specific candidate cell to the network device comprises:
sending a medium access control control element (MAC CE) to the network device, wherein the MAC CE is used to indicate the beam measurement result of the specific candidate cell.

7. The method according to any one of claims 1 to 6, further comprising:
sending a scheduling request to the network device, wherein the scheduling request is used to indicate the network device to schedule a reporting resource for the terminal device, and the terminal device reports the beam measurement result of the specific candidate cell to the network device by the reporting resource.

8. The method according to any one of claims 2 to 7, wherein the reporting configuration is used to indicate a reporting type based on an event, and reporting the beam measurement result of the specific candidate cell to the network device comprises:
reporting the beam measurement result of the specific candidate cell that meets the event to the network device.

9. The method according to claim 8, wherein the event comprises at least one of:
Event1, wherein Event1 is a measurement result of a best beam of the candidate cells>a measurement result of a best beam of serving cells + a first offset value offset1;
Event2, wherein Event2 is an average value of beam measurement results of the candidate cells > an average value of beam measurement results of the serving cells + a second offset value offset2;
Event3, wherein Event3 is an average value or a maximum value of the beam measurement results of the candidate cells > a threshold; or
Event4, wherein Event4 is that first N best measurement results are the beam measurement results of the candidate cells, and N is a positive integer.

10. The method according to claim 1, further comprising:
receiving indication information from the network device, wherein the indication information is used to indicate the specific candidate cell.

11. The method according to claim 10, wherein the indication information is MAC CE information, and the MAC CE information is used to activate the specific candidate cell, or deactivate the specific candidate cell, or indicate a measurement resource of the specific candidate cell associated with the reporting configuration.

12. The method according to claim 10 or 11, further comprising:
in response to there being a plurality of specific candidate cells, reporting cell identities of the plurality of specific candidate cells to the network device.

13. A method for reporting a beam measurement result, performed by a network device, comprising:
receiving the beam measurement result of a specific candidate cell reported by a terminal device, wherein the specific candidate cell is determined by the terminal device from candidate cells.

14. The method according to claim 13, further comprising:
sending a reporting configuration to the terminal device.

15. The method according to claim 14, wherein the reporting configuration is used to indicate first reporting resources corresponding to the candidate cells respectively, and receiving the beam measurement result of the specific candidate cell reported by the terminal device comprises:
receiving the beam measurement result of the specific candidate cell reported by the terminal device by a first reporting resource corresponding to the specific candidate cell.

16. The method according to claim 14, wherein the reporting configuration is used to indicate a second reporting resource shared by the candidate cells, and receiving the beam measurement result of the specific candidate cell reported by the terminal device comprises:
receiving the beam measurement result of the specific candidate cell reported by the terminal device by the second reporting resource, wherein a reporting format of reporting the beam measurement result of the specific candidate cell comprises a cell identity, and the cell identity is used to indicate the specific candidate cell.

17. The method according to claim 16, wherein the reporting format further comprises an identifier, and the identifier is used to indicate that the reported beam measurement result is the beam measurement result of the specific candidate cell.

18. The method according to claim 13, wherein the receiving the beam measurement result of the specific candidate cell reported by the terminal device comprises:
receiving a medium access control control element (MAC CE) sent by the terminal device, wherein the MAC CE is used to indicate the beam measurement result of the specific candidate cell.

19. The method according to any one of claims 13 to 18, further comprising:
receiving a scheduling request sent by the terminal device, wherein the scheduling request is used to indicate the network device to schedule a reporting resource for the terminal device, and the terminal device reports the beam measurement result of the specific candidate cell to the network device by the reporting resource.

20. The method according to any one of claims 14 to 19, wherein the reporting configuration is used to indicate a reporting type based on an event, and receiving the beam measurement result of the specific candidate cell reported by the terminal device comprises:
receiving the beam measurement result of the specific candidate cell that meets the event reported by the terminal device.

21. The method according to claim 20, wherein the event comprises at least one of:
Event1, wherein Event1 is a measurement result of a best beam of the candidate cells>a measurement result of a best beam of serving cells + a first offset value offset1;
Event2, wherein Event2 is an average value of beam measurement results of the candidate cells > an average value of beam measurement results of the serving cells + a second offset value offset2;
Event3, wherein Event3 is an average value or a maximum value of the beam measurement results of the candidate cells > a threshold; or
Event4, wherein Event4 is that first N best measurement results are the beam measurement results of the candidate cells, and N is a positive integer.

22. The method according to claim 13, further comprising:
sending indication information to the terminal device, wherein the indication information is used to indicate the specific candidate cell.

23. The method according to claim 22, wherein the indication information is MAC CE information, and the MAC CE information is used to activate the specific candidate cell, or deactivate the specific candidate cell, or indicate a measurement resource of the specific candidate cell associated with the reporting configuration.

24. The method according to claim 22 or 23, further comprising:
receiving cell identities of a plurality of specific candidate cell reported by the terminal device, wherein the cell identities of the plurality of specific candidate cell are reported by the terminal device in a case that there are the plurality specific candidate cells.

25. A communication device, comprising:
a transceiver module, configured to report a beam measurement result of a specific candidate cell to a network device, wherein the specific candidate cell is determined by the terminal device from candidate cells.

26. A communication device, comprising:
a transceiver module, configured to receive a beam measurement result of a specific candidate cell reported by a terminal device, wherein the specific candidate cell is determined by the terminal device from candidate cells.

27. A communication device, comprising a processor and a memory, wherein the memory stores a computer program, the processor executes the computer program stored in the memory to cause the communication device to perform the method according to any one of claims 1 to 12, or the method according to any one of claims 13 to 24.

28. A communication device, comprising: a processor and an interface circuit; wherein the interface circuit is used to receive code instructions and transmit the code instructions to the processor;
the processor is used to execute the code instructions to implement the method according to any one of claims 1 to 12, or the method according to any one of claims 13 to 24.

29. A computer readable storage medium storing instructions, wherein the instructions are executed to implement the method according to any one of claims 1 to 12, or the method according to any one of claims 13 to 24.
